(19) Europäisches Patentamt
European Patent Office
Office européen des brevets

(11) **EP 3 677 623 A1**

(12) **EUROPEAN PATENT APPLICATION**

(43) Date of publication:
08.07.2020 Bulletin 2020/28

(51) Int Cl.:
*C08J 9/14* (2006.01)      *C08L 61/04* (2006.01)

(21) Application number: 20151403.1

(22) Date of filing: 23.03.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 24.03.2015 JP 2015061561

(62) Document number(s) of the earlier application(s) in
accordance with Art. 76 EPC:
16768059.4 / 3 275 925

(71) Applicant: **Asahi Kasei Construction Materials
Corporation
Tokyo 101-8101 (JP)**

(72) Inventors:
• **HAMAJIMA, Masato
Tokyo, 101-8101 (JP)**

• **MUKAIYAMA, Shigemi
Tokyo, 101-8101 (JP)**
• **IHARA, Ken
Tokyo, 101-8101 (JP)**
• **MIHORI, Hisashi
Tokyo, 101-8101 (JP)**
• **FUKASAWA, Yoshihito
Tokyo, 101-8101 (JP)**

(74) Representative: **Strehl Schübel-Hopf & Partner
Maximilianstrasse 54
80538 München (DE)**

Remarks:
This application was filed on 13-01-2020 as a
divisional application to the application mentioned
under INID code 62.

(54) **PHENOLIC RESIN FOAM AND METHOD OF PRODUCING SAME**

(57)     Provided are a phenolic resin foam having low environmental impact, high compressive strength, excellent handling properties in installation, and low costs associated with securing, and also a method of producing the same. The phenolic resin foam contains at least one selected from the group consisting of a chlorinated hydrofluoroolefin, a non-chlorinated hydrofluoroolefin, and a halogenated hydrocarbon. The phenolic resin foam has a density of at least 20 kg/m$^3$ and no greater than 100 kg/m$^3$, and a closed cell ratio of at least 80% and no greater than 99%. The phenolic resin foam has a brittleness of no greater than 50% as determined in accordance with JIS A 9511(2003)5.14. The density and 10% compressive strength of the phenolic resin foam satisfy a relationship: $C \geq 0.5X - 7$, where C represents the 10% compressive strength (N/cm$^2$) and X represents the density (kg/m$^3$).

EP 3 677 623 A1

**Description**

TECHNICAL FIELD

This disclosure relates to a phenolic resin foam and a method of producing the same.

BACKGROUND

In recent years, there has been demand for improvement of the air-tightness performance and thermal insulation performance of housing for reasons such as increased awareness of energy efficiency and compulsory adoption of next generation energy efficiency standards. This demand for improved housing air-tightness performance and thermal insulation performance is expected to require an increase in the thickness of insulating materials. However, increasing the thickness of insulating materials is problematic as it necessitates design changes in consideration of reduction of indoor living space and limitations on the space inside walls.

Examples of known insulating materials for housing include fibrous insulating materials such as glass wool and rock wool, and foamed plastic insulating materials obtained through foaming of styrene resin, urethane resin, and phenolic resin. Of these insulating materials, phenolic resin foam is an excellent insulating material for housing due to having low gas permeability and stable long-term thermal insulation performance. The thermal insulation performance of phenolic resin foam is known to be significantly influenced by the type and state of compounds encapsulated within cells of the phenolic resin foam.

Chlorofluorocarbons (CFCs) having low thermal conductivity have conventionally been used as such encapsulated compounds in phenolic resin foam. However, CFCs make a significant contribution to depletion of the ozone layer and climate change, and the use thereof was abolished through adoption of the Montreal Protocol in 1987. Consequently, there has been a change toward hydrofluorocarbons (HFCs) and the like having comparatively low ozone depletion potential for use as such encapsulated compounds. However, since HFCs still have high global warming potential, there has been demand for compounds that have low thermal conductivity in the same way as CFCs and HFCs, while also having low ozone depletion potential and low global warming potential.

PTL 1, 2, 3, and 4 disclose chlorinated and non-chlorinated hydrofluoroolefins as compounds that have low ozone depletion potential and low global warming potential, and that exhibit flame retardance.

CITATION LIST

Patent Literature

PTL 1: JP 2010-522819 A
PTL 2: JP 2013-064139 A
PTL 3: JP 2011-504538 A
PTL 4: JP 2007-070507 A

SUMMARY

(Technical Problem)

PTL 1, 2, 3, and 4 disclose numerous chlorinated and non-chlorinated hydrofluoroolefins, among which, 1-chloro-3,3,3-trifluoropropene, 1,3,3,3-tetrafluoro-1-propene, 2,3,3,3-tetrafluoro-1-propene, and 1,1,1,4,4,4-hexafluoro-2-butene are disclosed to have low ozone depletion potential and low global warming potential, and be applicable in foamed plastic insulating materials. However, although these compounds have low ozone depletion potential and global warming potential, they also have high polarity. Consequently, when these compounds are used in phenolic resin foam, there is an issue that phenolic resin including hydrophilic groups in the form of hydroxy groups is plasticized thereby, and the compressive strength and closed cell ratio of the phenolic resin foam are reduced. Therefore, when chlorinated and non-chlorinated hydrofluoroolefins such as described above have simply been used as replacements in techniques for phenolic resin foam in which conventional hydrocarbons are used, there have been cases in which poor quality foam with low compressive strength and a low closed cell ratio has been formed. On the other hand, increasing the compressive strength of phenolic resin foam by conventional techniques requires an increase in the density of the phenolic resin foam, which increases the weight of the phenolic resin foam and leads to problems such as poorer handling properties in installation and higher costs associated with securing the phenolic resin foam using other components, the frame, or the like.

Accordingly, an objective of this disclosure is to provide a phenolic resin foam having low environmental impact (i.e., low ozone depletion potential and global warming potential), high compressive strength, excellent handling properties in installation, and low costs associated with securing, and also to provide a method of producing this phenolic resin foam.

(Solution to Problem)

As a result of diligent research conducted to achieve the objective set forth above, the inventors discovered that a phenolic resin foam having low environmental impact, high compressive strength, excellent handling properties in installation, and low costs associated with securing can be obtained by using a specific compound and by setting the density, closed cell ratio, and 10% compressive strength within specific ranges. The inventors completed the disclosed techniques based on this discovery.

Specifically, the present disclosure provides a phenolic resin foam containing at least one selected from the group consisting of a chlorinated hydrofluoroolefin, a non-chlorinated hydrofluoroolefin, and a halogenated hydrocarbon, wherein the phenolic resin foam has a density of at least 20 kg/m$^3$ and no greater than 100 kg/m$^3$, the phenolic resin foam has a closed cell ratio of at least 80% and no greater than 99%, and the density and 10% compressive strength of the phenolic resin foam satisfy a relationship:

$$C \geq 0.5X - 7$$

where C represents the 10% compressive strength in N/cm$^2$ and X represents the density in kg/m$^3$.

The phenolic resin foam preferably contains: the halogenated hydrocarbon; and at least one selected from the group consisting of the chlorinated hydrofluoroolefin and the non-chlorinated hydrofluoroolefin.

The at least one selected from the group consisting of the chlorinated hydrofluoroolefin and the non-chlorinated hydrofluoroolefin is preferably at least one selected from the group consisting of 1-chloro-3,3,3-trifluoropropene, 2-chloro-3,3,3-trifluoropropene, 1,3,3,3-tetrafluoro-1-propene, 2,3,3,3-tetrafluoro-1-propene, and 1,1,1,4,4,4-hexafluoro-2-butene.

The halogenated hydrocarbon is preferably isopropyl chloride.

The phenolic resin foam preferably further contains a hydrocarbon having a carbon number of no greater than 6.

The at least one selected from the group consisting of the chlorinated hydrofluoroolefin, the non-chlorinated hydrofluoroolefin, and the halogenated hydrocarbon preferably has a content of at least 30 mass% relative to total content of the chlorinated hydrofluoroolefin, the non-chlorinated hydrofluoroolefin, the halogenated hydrocarbon, and the hydrocarbon having a carbon number of no greater than 6.

The phenolic resin foam preferably further contains a nitrogen-containing compound.

The nitrogen-containing compound is preferably a compound selected from the group consisting of urea, melamine, nuclidine, pyridine, hexamethylenetetramine, and mixtures thereof.

An absolute value of an amount of dimensional change of the phenolic resin foam after three dry-wet cycles is preferably no greater than 2.0 mm.

The phenolic resin foam preferably has a brittleness of no greater than 50% as determined in accordance with JIS A 9511(2003)5.1.4.

Moreover, the present disclosure provides a phenolic resin foam laminate including the phenolic resin foam described above and surface materials respectively on a first surface and a second surface of the phenolic resin foam, wherein the surface materials are both gas permeable.

Furthermore, the present disclosure provides a method of producing a phenolic resin foam including foaming and curing, on a surface material, a foamable phenolic resin composition containing a phenolic resin, a surfactant, a curing catalyst, and at least one selected from the group consisting of a chlorinated hydrofluoroolefin, a non-chlorinated hydrofluoroolefin, and a halogenated hydrocarbon, wherein the phenolic resin has a weight average molecular weight Mw of at least 400 and no greater than 3,000 as determined by gel permeation chromatography, the phenolic resin has a viscosity at 40°C of at least 1,000 mPa·s and no greater than 100,000 mPa·s, the phenolic resin has a viscosity increase rate constant of at least 0.05 (1/min) and no greater than 0.5 (1/min), the phenolic resin foam has a density of at least 20 kg/m$^3$ and no greater than 100 kg/m$^3$, the phenolic resin foam has a closed cell ratio of at least 80% and no greater than 99%, and the density and 10% compressive strength of the phenolic resin foam satisfy a relationship:

$$C \geq 0.5X - 7$$

where C represents the 10% compressive strength in N/cm$^2$ and X represents the density in kg/m$^3$.

The phenolic resin preferably has a loss tangent tan $\delta$ at 40°C of at least 0.5 and no greater than 40.0, and a loss tangent tan $\delta$ at 60°C of at least 2.0 and no greater than 90.0.

(Advantageous Effect)

The disclosed phenolic resin foam has low environmental impact, high compressive strength, excellent handling properties in installation, and low costs associated with securing as a result of having the configuration set forth above.

Moreover, the disclosed method of producing a phenolic resin foam enables simple production of the disclosed phenolic resin foam having the configuration set forth above.

DETAILED DESCRIPTION

The following provides a detailed description of a disclosed embodiment (hereinafter, also referred to as "the present embodiment"). However, the disclosed techniques are not limited to the following embodiment.

A phenolic resin foam according to the present embodiment contains at least one selected from the group consisting of a chlorinated hydrofluoroolefin, a non-chlorinated hydrofluoroolefin, and a halogenated hydrocarbon, and has a density of at least 20 kg/m$^3$ and no greater than 100 kg/m$^3$ and a closed cell ratio of at least 80% and no greater than 99%. Moreover, the density and 10% compressive strength of the phenolic resin foam according to the present embodiment satisfy a relationship:

$$C \geq 0.5X - 7$$

where C represents the 10% compressive strength (N/cm$^2$) and X represents the density (kg/m$^3$).

In the present specification, the term "compound $\alpha$" may be used to refer to a compound or mixture composed of at least one selected from the group consisting of a chlorinated hydrofluoroolefin, a non-chlorinated hydrofluoroolefin, and a halogenated hydrocarbon.

The compound $\alpha$ contained in the phenolic resin foam according to the present embodiment has low ozone depletion potential and global warming potential, and, as a result, the phenolic resin foam according to the present embodiment has low environmental impact.

No specific limitations are placed on the chlorinated hydrofluoroolefin or the non-chlorinated hydrofluoroolefin, but from a viewpoint of low thermal conductivity and foaming properties, 1-chloro-3,3,3-trifluoropropene, 2-chloro-3,3,3-trifluoropropene, 1,3,3,3-tetrafluoro-1-propene, 2,3,3,3-tetrafluoro-1-propene, 1,1,1,4,4,4-hexafluoro-2-butene, and the like are preferable.

Moreover, no specific limitations are placed on the halogenated hydrocarbon, but from a viewpoint of low thermal conductivity, low ozone depletion potential and global warming potential, and boiling point, a halogenated hydrocarbon that includes at least one hydrogen atom, a halogenated hydrocarbon that does not include more than one type of halogen atom, or a halogenated hydrocarbon that does not include a fluorine atom is preferable, and isopropyl chloride is more preferable.

The compound $\alpha$ may include one compound or a combination of compounds selected from the group consisting of a chlorinated hydrofluoroolefin, a non-chlorinated hydrofluoroolefin, and a halogenated hydrocarbon.

The phenolic resin foam according to the present embodiment may further contain a hydrocarbon, carbon dioxide, or the like, and preferably further contains a hydrocarbon.

The hydrocarbon may, for example, be a hydrocarbon having a carbon number of no greater than 6. In other words, the phenolic resin foam according to the present embodiment may, for example, contain a hydrocarbon having a carbon number of no greater than 6 in addition to containing at least one selected from the group consisting of a chlorinated hydrofluoroolefin, a non-chlorinated hydrofluoroolefin, and a halogenated hydrocarbon. Specific examples of the hydrocarbon having a carbon number of no greater than 6 include normal butane, isobutane, cyclobutane, normal pentane, isopentane, cyclopentane, neopentane, normal hexane, isohexane, 2,2-dimethylbutane, 2,3-dimethylbutane, and cyclohexane. Of these hydrocarbons, a pentane such as normal pentane, isopentane, cyclopentane, or neopentane, or a butane such as normal butane, isobutane, or cyclobutane is preferable. One hydrocarbon may be used individually, or two or more hydrocarbons may be used in combination.

Although no specific limitations are made, the phenolic resin foam according to the present embodiment may, for example, contain a single compound composed of one type of the compound $\alpha$, may contain a plurality of types of the compound $\alpha$, or may contain at least one type of the compound $\alpha$ and at least one type of the hydrocarbon. Of such examples, a case in which the phenolic resin foam according to the present embodiment contains a halogenated hydrocarbon and at least one compound selected from the group consisting of a chlorinated hydrofluoroolefin and a non-chlorinated hydrofluoroolefin is preferable. Moreover, from a viewpoint of obtaining foam having a small average cell diameter, high closed cell ratio, and high compressive strength, it is preferable that the phenolic resin foam according to the present embodiment contains, for example, at least type of the compound $\alpha$ and at least one type of the hydrocarbon (in particular, one or two types of the compound $\alpha$ as a first component and a hydrocarbon (for example, a pentane such as cyclopentane or isopentane) as a second component).

Although no specific limitations are placed on the content of the compound $\alpha$ in a situation in which the phenolic resin foam according to the present embodiment contains the hydrocarbon having a carbon number of no greater than 6, from a viewpoint of achieving a small average cell diameter, high closed cell ratio, and low thermal conductivity, the content of the compound $\alpha$ relative to the total content (100 mass%) of the compound $\alpha$ and the hydrocarbon having a carbon number of no greater than 6 is preferably at least 30 mass% (for example, 30 mass% to 100 mass%), more preferably 40 mass% to 100 mass%, even more preferably 50 mass% to 100 mass%, particularly preferably 60 mass% to 100 mass%, especially preferably 70 mass% to 100 mass%, and most preferably 80 mass% to 100 mass%.

In the present embodiment, a nitrogen-containing compound may be added to phenolic resin to act as a formaldehyde catcher for reducing formaldehyde emission from the phenolic resin foam or for an objective of providing the phenolic resin foam with flexibility.

The nitrogen-containing compound may, for example, be a compound selected from the group consisting of urea, melamine, nuclidine, pyridine, hexamethylenetetramine, and mixtures thereof. Urea is preferable as the nitrogen-containing compound. Examples of additives other than nitrogen-containing compounds that may be added include nitrogen, helium, argon, metal oxides, metal hydroxides, metal carbonates, talc, kaolin, silica powder, silica sand, mica, calcium silicate powder, wollastonite, glass powder, glass beads, fly ash, silica fume, graphite, and aluminum powder. Examples of metal oxides that may be used include calcium oxide, magnesium oxide, aluminum oxide, and zinc oxide. Examples of metal hydroxides that may be used include aluminum hydroxide, magnesium hydroxide, and calcium hydroxide. Examples of metal carbonates that may be used include calcium carbonate, magnesium carbonate, barium carbonate, and zinc carbonate. Moreover, silane-based compounds and siloxane-based compounds may be added as additives other than nitrogen-containing compounds. These compounds may be used individually or in combination. Examples of silane-based compounds that may be used include hexamethyldisilazane and dimethoxydimethylsilane, and examples of siloxane-based compounds that may be used include hexamethyldisiloxane. Since silane-based compounds and siloxane-based compounds are non-polar, they tend not to mix well with polar phenolic resin. Consequently, foam having a small cell diameter and high closed cell ratio can be obtained since many cell nuclei are formed. The nitrogen-containing compound and additives other than the nitrogen-containing compound may be used individually or as a combination of two or more types.

The density of the phenolic resin foam according to the present embodiment is at least 20 kg/m$^3$ and no greater than 100 kg/m$^3$, preferably at least 20 kg/m$^3$ and no greater than 70 kg/m$^3$, more preferably at least 20 kg/m$^3$ and no greater than 40 kg/m$^3$, even more preferably at least 22 kg/m$^3$ and no greater than 35 kg/m$^3$, and most preferably at least 23 kg/m$^3$ and no greater than 28 kg/m$^3$. If the density is less than 20 kg/m$^3$, it is difficult to obtain a highly closed cell structure and compressive strength is significantly reduced because the cell walls are thin and tend to rupture during foaming. On the other hand, a density of greater than 100 kg/m$^3$ lowers thermal insulation performance because thermal conduction by solid derived from resin and other solid components is increased.

Note that the density is a value measured by a method described in "(2) Foam density" of the subsequent "Evaluation" section. The density can be adjusted, for example, through the proportions of the compound $\alpha$ and the hydrocarbon, the proportion of a curing catalyst, the foaming temperature, the molecular weight of the phenolic resin, the reaction rate, the viscosity of the phenolic resin, and so forth.

The inventors discovered that in a situation in which a hydrocarbon in a conventional hydrocarbon-containing phenolic resin foam is simply replaced with the compound $\alpha$, an increase in viscosity associated with curing reaction of phenolic resin in a foaming and curing process of the phenolic resin foam is cancelled out by the high miscibility of the compound $\alpha$ with the phenolic resin, leading to a relatively fast cell growth rate. The inventors also discovered that, as a consequence, it is difficult to obtain a phenolic resin foam having high compressive strength, excellent handling properties in installation, and low costs associated with securing when the hydrocarbon is simply replaced with the compound $\alpha$. Through diligent investigation, the inventors discovered that the cause of the above is related to the closed cell ratio and compressive strength becoming too high or too low.

Moreover, the inventors discovered that through production conditions, and in particular through use of a phenolic resin having a Mw, viscosity, viscosity increase rate constant, and tan $\delta$ within specific ranges, it is possible to obtain physical property values such as closed cell ratio, compressive strength, and so forth that are within specific ranges, and by satisfying these physical property values, it is possible to obtain a phenolic resin foam having high compressive strength, excellent handling properties in installation, and low costs associated with securing.

The closed cell ratio of the phenolic resin foam according to the present embodiment is at least 80% and no greater than 99%, preferably at least 85% and no greater than 99%, more preferably at least 88% and no greater than 99%, and particularly preferably at least 90% and no greater than 99%. A closed cell ratio that is too low is unfavorable in terms that thermal insulation performance deteriorates over the long-term due to the encapsulated hydrocarbon or compound $\alpha$ in the cells being easily displaced by air, and compressive strength is reduced due to cell walls rupturing more easily.

Note that the closed cell ratio is a value measured by a method described in "(3) Closed cell ratio" of the subsequent "Evaluation" section. The closed cell ratio can be adjusted, for example, through the viscosity of the phenolic resin, the types and proportions of the compound $\alpha$ and the hydrocarbon, the curing conditions, the oven temperature during foaming and curing, and so forth.

Although no specific limitations are placed on the 10% compressive strength of the phenolic resin foam according to the present embodiment, from a viewpoint of strength of the phenolic resin foam and not excessively raising the density of the phenolic resin foam (i.e., not excessively increasing the weight and production costs of the phenolic resin foam), the 10% compressive strength is, for example, preferably at least 6 N/cm$^2$ and no greater than 50 N/cm$^2$, more preferably at least 8 N/cm$^2$ and no greater than 50 N/cm$^2$, even more preferably at least 10 N/cm$^2$ and no greater than 40 N/cm$^2$, particularly preferably at least 12 N/cm$^2$ and no greater than 40 N/cm$^2$, and most preferably at least 15 N/cm$^2$ and no greater than 40 N/cm$^2$.

Note that the 10% compressive strength is a value measured by a method described in "(4) 10% compressive strength" of the subsequent "Evaluation" section. The 10% compressive strength can be adjusted, for example, through the molecular weight, viscosity, and reaction rate of the phenolic resin, the types and proportions of the compound $\alpha$ and the hydrocarbon, the curing conditions (for example, the additive amount of curing catalyst and heating time), the foaming conditions (for example, the oven temperature), and the foam structure (for example, a structure not having holes in cell walls).

From a viewpoint of strength against compression, handling properties in installation, and lowering costs associated with securing, the 10% compressive strength and the density of the phenolic resin foam according to the present embodiment are required to satisfy the following relationship:

$$C \geq 0.5X - 7$$

where C represents the 10% compressive strength (N/cm$^2$) and X represents the density (kg/m$^3$).

Moreover, from a viewpoint of obtaining even better strength against compression and handling properties in installation, and further lowering costs associated with securing, the left side (C) of the relationship is preferably at least 0.5 greater than the right side (0.5X - 7) of the relationship, more preferably at least 0.8 greater than the right side (0.5X - 7) of the relationship, even more preferably at least 1.0 greater than the right side (0.5X - 7) of the relationship, and particularly preferably at least 1.5 greater than the right side (0.5X - 7) of the relationship.

When the relationship is satisfied and the density is at least 20 kg/m$^3$, the foam has excellent strength. Accordingly, in a building having a floor or flat roof in which the phenolic resin foam is installed, a problem of surface denting or crack formation in the phenolic resin foam tends not to occur when the phenolic resin foam is walked upon during construction or maintenance.

The absolute value of an amount of dimensional change of the phenolic resin foam according to the present embodiment after three dry-wet cycles (also referred to simply as "the absolute value of the amount of dimensional change") is preferably no greater than 2.0 mm, more preferably no greater than 1.6 mm, even more preferably no greater than 1.3 mm, and most preferably no greater than 1.0 mm. It is unfavorable for the absolute value of the amount of dimensional change to be greater than 2.0 mm because, in a situation in which the phenolic resin foam contracts due to dry-wet cycling after installation, a gap may open at a join of an insulating board made from the foam, resulting in poorer building thermal insulation performance. On the other hand, in a situation in which the phenolic resin foam expands, a join of the insulting board may rise up, which is undesirable because it causes loss of wall surface smoothness and poor external appearance.

Note that the absolute value of the amount of dimensional change is a value measured by a method described in "(5) Absolute value of amount of dimensional change after three dry-wet cycles" of the subsequent "Evaluation" section. The absolute value of the amount of dimensional change can be adjusted, for example, through the molecular weight and reaction rate of the phenolic resin, the types and proportions of the compound $\alpha$ and the hydrocarbon, the additive amount of the curing catalyst, the curing time of the phenolic resin, the oven temperature in foaming and curing, and so forth.

The brittleness of the phenolic resin foam according to the present embodiment is preferably no greater than 50%, more preferably no greater than 40%, even more preferably no greater than 30%, particularly preferably no greater than 20%, especially preferably no greater than 15%, and most preferably no greater than 10%. A brittleness of greater than 50% is unfavorable due to increased production costs. Moreover, a brittleness of greater than 50% is unfavorable because the foam tends to easily chip when a board made from the phenolic resin foam is processed during installation.

Note that the brittleness is a value measured by a method described in "(6) Brittleness" of the subsequent "Evaluation" section. The brittleness can be adjusted, for example, through the composition and proportion of the phenolic resin, the presence of additives such as a nitrogen-containing compound and a plasticizer, the density of the phenolic resin foam, the crosslink density of the phenolic resin in the phenolic resin foam, and so forth.

The phenolic resin foam according to the present embodiment can be produced by, for example, foaming and curing a foamable phenolic resin composition containing a phenolic resin and compound $\alpha$ (preferably, a phenolic resin, a surfactant, a curing catalyst, and compound $\alpha$). The foamable phenolic resin composition may further contain a hydrocarbon, and may further contain additives such as a nitrogen-containing compound, a plasticizer, a flame retardant, a curing aid, a silane-based compound, and a siloxane-based compound. Moreover, a plasticizer such as a phthalic acid ester may be added to more precisely control the rate of foaming and curing.

The method of producing the phenolic resin foam according to the present embodiment may, for example, be a method including foaming and curing, on a surface material, a foamable phenolic resin composition containing a phenolic resin, a surfactant, a curing catalyst, and compound $\alpha$, wherein the phenolic resin has a weight average molecular weight Mw of at least 400 and no greater than 3,000 as determined by gel permeation chromatography, the phenolic resin has a viscosity at 40°C of at least 1,000 mPa·s and no greater than 100,000 mPa·s, and the phenolic resin has a viscosity increase rate constant of at least 0.05 (1/min) and no greater than 0.5 (1/min).

The phenolic resin is, for example, obtained by using a phenyl group-containing compound and an aldehyde group-containing compound, or a derivative thereof, as raw materials, and carrying out polymerization by heating in a temperature range of 40°C to 100°C in the presence of an alkali catalyst.

Examples of the phenyl group-containing compound that is used in preparation of the phenolic resin include phenol, resorcinol, catechol, o-, m-, and p-cresol, xylenols, ethylphenols, and p-tert-butyl phenol. Of these compounds, phenol and o-, m-, and p-cresol are preferable, and phenol is most preferable. The phenyl group-containing compound may be a compound having a binuclear phenyl group. These phenyl group-containing compounds may be used individually or as a combination of two or more types.

In a situation in which two or more phenyl group-containing compounds are used, the "molar amount of phenyl group-containing compound" is the sum of the respective molar amounts of the phenyl group-containing compounds that are used. In a situation in which a binuclear phenyl group-containing compound is used, the "molar amount of phenyl group-containing compound" is calculated by using, as the molar amount of the binuclear phenyl group-containing compound, a value calculated by multiplying the number of moles of the binuclear phenyl group-containing compound by 2.

Examples of the aldehyde group-containing compound or derivative thereof that is used in preparation of the phenolic resin include formaldehyde, paraformaldehyde, 1,3,5-trioxane, and tetraoxymethylene. Of these compounds, formaldehyde and paraformaldehyde are preferable. These aldehyde group-containing compounds or derivatives thereof may be used individually or as a combination of two or more types.

In situation in which two or more aldehyde group-containing compounds or derivatives thereof are used, the "molar amount of aldehyde group-containing compound or derivative thereof" is the sum of the respective molar amounts of the aldehyde group-containing compounds or derivatives thereof that are used. In a situation in which paraformaldehyde is used, the "molar amount of aldehyde group-containing compound or derivative thereof" is calculated using a value obtained by dividing the weight of paraformaldehyde that is used by 30. Moreover, in a situation in which 1,3,5-trioxane is used, the "molar amount of aldehyde group-containing compound or derivative thereof" is calculated using a value obtained by multiplying the number of moles of 1,3,5-trioxane that is used by 3. Furthermore, in a situation in which tetraoxymethylene is used, the "molar amount of aldehyde group-containing compound or derivative thereof" is calculated using a value obtained by multiplying the number of moles of tetraoxymethylene that is used by 4.

The molar ratio of the aldehyde group-containing compound or derivative thereof used in preparation of the phenolic resin relative to the phenyl group-containing compound used in preparation of the phenolic resin (molar amount of aldehyde group-containing compound or derivative thereof/molar amount of phenyl group-containing compound) is preferably at least 1.5 and no greater than 3, more preferably at least 1.6 and no greater than 2.7, even more preferably at least 1.7 and no greater than 2.5, and most preferably at least 1.8 and no greater than 2.2. When the molar ratio of the aldehyde group-containing compound or derivative thereof relative to the phenyl group-containing compound is at least 1.5, this ensures strength of the phenolic resin foam by suppressing lowering of cell wall strength during foaming. Moreover, this sufficiently provides the amount of aldehyde group-containing compound or derivative thereof that is required for crosslinking of phenol nuclei and enables sufficient progression of crosslinking. As a result, cell wall strength of the phenolic resin foam can be increased and the closed cell ratio of the phenolic resin foam can be improved. Moreover, when the molar ratio of the aldehyde group-containing compound or derivative thereof relative to the phenyl group-containing compound is no greater than 3, this facilitates crosslinking of the phenolic resin, and thus cell wall strength of the phenolic resin foam can be increased and the closed cell ratio of the phenolic resin foam can be improved.

The weight average molecular weight Mw of the phenolic resin as determined by gel permeation chromatography according to a method described in "(7) Weight average molecular weight Mw of phenolic resin" of the subsequent "Evaluation" section is, for example, preferably at least 400 and no greater than 3,000, more preferably at least 500 and no greater than 3,000, even more preferably at least 700 and no greater than 3,000, particularly preferably at least 1,000 and no greater than 2,700, and most preferably at least 1,500 and no greater than 2,500. If the weight average molecular weight Mw is smaller than 400, the amount of heat generated after mixing of the curing catalyst with the phenolic resin increases due to a large amount of addition reaction sites remaining in phenol nuclei, and thus the phenolic resin plasticized by at least one selected from the group consisting of a chlorinated hydrofluoroolefin, a non-chlorinated hydrofluoroolefin, and a halogenated hydrocarbon reaches a high temperature and the viscosity thereof decreases. As a result, cell rupturing is induced during foaming and the closed cell ratio falls, leading to reduction of compressive strength. Moreover, if the weight average molecular weight Mw is not sufficiently large, compressive strength also tends to be reduced due to cell walls not being sufficiently extended during foaming of the phenolic resin. Furthermore, cells have a higher tendency to coalesce during foaming and curing when the viscosity of the phenolic resin is reduced as described above. This leads to the formation of poor quality foam including many voids and having a large average cell diameter. On the other hand, a weight average molecular weight Mw of greater than 3,000 is unfavorable because the viscosity of the phenolic resin becomes too high, making it difficult to obtain the required expansion ratio. Moreover, since the amount of low molecular weight components in the phenolic resin is small in such a situation, the amount of heat that is generated during curing of the phenolic resin is reduced. This may result in lower compressive strength due to inadequate progress of the curing reaction.

The viscosity of the phenolic resin at 40°C is, for example, preferably at least 1,000 mPa·s and no greater than 100,000 mPa·s. From a viewpoint of improving the closed cell ratio and reducing the average cell diameter, the viscosity of the phenolic resin at 40°C is more preferably at least 5,000 mPa·s and no greater than 50,000 mPa·s, and particularly preferably at least 7,000 mPa·s and no greater than 30,000 mPa·s. If the viscosity of the phenolic resin is too low (for example, lower than 5,000 mPa·s), the cell diameter tends to become excessively large due to cell nuclei in the phenolic resin coalescing during foaming and curing. Moreover, this tends to lead to a poor closed cell ratio as a result of cell walls rupturing more easily due to foaming pressure. An excessively high phenolic resin viscosity (for example, higher than 100,000 mPa·s) is unfavorable because it may not be possible to achieve the required expansion ratio due to slowing of the foaming rate.

Note that the viscosity at 40°C is a value measured by a method described in "(8) Viscosity of phenolic resin at 40°C" of the subsequent "Evaluation" section. The viscosity at 40°C can be adjusted, for example, through the weight average molecular weight Mw and moisture percentage of the phenolic resin, addition of a plasticizer or the like, and so forth.

A viscosity increase rate constant of the phenolic resin is, for example, preferably at least 0.05 (1/min) and no greater than 0.5 (1/min), more preferably at least 0.05 (1/min) and no greater than 0.4 (1/min), even more preferably at least 0.07 (1/min) and no greater than 0.35 (1/min), and most preferably at least 0.08 (1/min) and no greater than 0.3 (1/min). If the viscosity increase rate constant is less than 0.05 (1/min), curing reaction of the phenolic resin does not adequately progress during foaming, and thus cells may rupture and poor quality foam may be formed, leading to lower compressive strength. Moreover, since crosslinking reaction of the phenolic resin does not adequately progress, adequate compressive strength may not be expressed due to a decrease in strength of resin portions in the foam. If the viscosity increase rate constant is greater than 0.5 (1/min), reaction heat associated with curing of the phenolic resin during an initial stage of foaming becomes excessively large. This heat accumulates in the foam and the foam pressure becomes excessively high, which induces cell rupturing and lowers compressive strength.

Note that the viscosity increase rate constant is a value measured by a method described in "(9) Viscosity increase rate constant" of the subsequent "Evaluation" section. The viscosity increase rate constant can be adjusted, for example, through the types and proportions of the phenyl group-containing compound and the aldehyde group-containing compound or derivative thereof used in synthesis of the phenolic resin, the weight average molecular weight Mw of the phenolic resin, the additive amount of the nitrogen-containing compound, the additive amount of the curing catalyst, and so forth.

Although tan δ (loss tangent) of the phenolic resin at 40°C is not specifically limited, from a viewpoint of closed cell ratio and compressive strength, tan δ at 40°C is preferably at least 0.5 and no greater than 40.0, more preferably at least 0.5 and no greater than 35.0, and even more preferably at least 0.5 and no greater than 30.0.

Moreover, although tan δ (loss tangent) of the phenolic resin at 50°C is not specifically limited, from a viewpoint of closed cell ratio and compressive strength, tan δ at 50°C is preferably at least 1.25 and no greater than 65.0, more preferably at least 2.0 and no greater than 60.0, and even more preferably at least 4.0 and no greater than 55.0.

Furthermore, although tan δ (loss tangent) of the phenolic resin at 60°C is not specifically limited, from a viewpoint of closed cell ratio and compressive strength, tan δ at 60°C is preferably at least 2.0 and no greater than 90.0, more preferably at least 2.0 and no greater than 80.0, and even more preferably at least 4.0 and no greater than 70.0.

Among such ranges, it is preferable that the loss tangent tan δ of the phenolic resin at 40°C is at least 0.5 and no greater than 40.0 and that the loss tangent tan δ of the phenolic resin at 60°C is at least 2.0 and no greater than 90.0.

More preferably, the loss tangent tan $\delta$ at 40°C, the loss tangent tan $\delta$ at 50°C, and the loss tangent tan $\delta$ at 60°C are positioned within or on the boundary of a quadrilateral shape formed by four points (40°C, 0.5), (40°C, 40.0), (60°C, 2.0) and (60°C, 90.0) plotted on a graph with temperature on the horizontal axis and the loss tangent tan $\delta$ on the vertical axis (i.e., a quadrilateral shape formed by line segments connecting the coordinates of these four points). Even more preferably, the loss tangent tan $\delta$ throughout a range of 40°C to 60°C is positioned within or on the boundary of a quadrilateral shape formed by four points (40°C, 0.5), (40°C, 40.0), (60°C, 2.0) and (60°C, 90.0) plotted on a graph with temperature on the horizontal axis and the loss tangent tan $\delta$ on the vertical axis (i.e., a quadrilateral shape formed by line segments connecting the coordinates of these four points). In other words, it is more preferable that the loss tangent tan $\delta$ at 40°C, the loss tangent tan $\delta$ at 50°C, and the loss tangent tan $\delta$ at 60°C are positioned on or between a straight line $y = 0.075x - 2.5$ and a straight line $y = 2.5x - 60$ plotted on a graph with temperature on the horizontal axis and the loss tangent tan $\delta$ on the vertical axis, and even more preferable that the loss tangent tan $\delta$ throughout a range of 40°C to 60°C is positioned on or between a straight line $y = 0.075x - 2.5$ and a straight line $y = 2.5x - 60$ plotted on a graph with temperature on the horizontal axis and the loss tangent tan $\delta$ on the vertical axis.

The four points plotted on the graph with temperature on the horizontal axis and the loss tangent tan $\delta$ on the vertical axis are more preferably (40°C, 0.5), (40°C, 35.0), (60°C, 2.0) and (60°C, 80.0), and most preferably (40°C, 0.5), (40°C, 30.0), (60°C, 4.0) and (60°C, 70.0).

Even in the case of phenolic resins having the same viscosity, the behavior thereof under heating varies depending on differences in crosslinking state and additives. Since tan $\delta$ is the ratio of the loss modulus and the storage modulus, the phenolic resin tends to stretch more easily during foaming when the value of tan $\delta$ is large and tends to rupture more easily during foaming when the value of tan $\delta$ is small. Accordingly, if the loss tangent tan $\delta$ of the phenolic resin is greater than any of the ranges set forth above, the cell growth rate becomes excessively high relative to the foaming pressure. This induces cell rupturing and results in a lower closed cell ratio and compressive strength. Moreover, there is a concern that high compressive strength may not be displayed due to extension of the phenolic resin during foaming becoming more difficult. If the loss tangent tan $\delta$ is smaller than any of the ranges set forth above, the phenolic resin ruptures more easily during foaming. This causes formation of a non-continuous structure due to breaking of cell walls and framework of the phenolic resin foam, and tends to lower the compressive strength.

Note that in the present specification, tan $\delta$ (loss tangent) is a value measured by a method described in "(10) tan $\delta$" of the subsequent "Evaluation" section. The value of tan $\delta$ can be adjusted, for example, through the types and proportions of the phenyl group-containing compound and the aldehyde group-containing compound or derivative thereof used in synthesis of the phenolic resin, the weight average molecular weight Mw of the phenolic resin, the moisture percentage of the phenolic resin, additives such as a plasticizer, and so forth.

The compound $\alpha$ may be any of the previously described examples.

Although the content of the compound $\alpha$ in the foamable phenolic resin composition is not specifically limited, from a viewpoint of thermal conductivity, the content of the compound $\alpha$ relative to the total amount (100 mass%) of the phenolic resin and the surfactant is preferably at least 0.5 mass% and no greater than 25 mass%, more preferably at least 2 mass% and no greater than 20 mass%, even more preferably at least 3 mass% and no greater than 18 mass%, and particularly preferably at least 3 mass% and no greater than 15 mass%.

Moreover, although the total content of the compound $\alpha$ and the hydrocarbon in the present embodiment is not specifically limited, the total amount of the compound $\alpha$ and/or the hydrocarbon that is added relative to the total amount (100 mass%) of the phenolic resin and the surfactant is, for example, preferably at least 3.0 mass% and no greater than 25.0 mass%, more preferably at least 3.0 mass% and no greater than 22.5 mass%, even more preferably at least 5.0 mass% and no greater than 20.0 mass%, particularly preferably at least 6.0 mass% and no greater than 18.0 mass%, and most preferably at least 6.0 mass% and no greater than 15.0 mass%. An additive amount of less than 3.0 mass% is unfavorable because it becomes very difficult to obtain the required expansion ratio and the density of the foam becomes excessively high, and thus it is not possible to obtain good quality foam. An additive amount of greater than 25.0 mass% is unfavorable because the plasticizing effect of the compound $\alpha$ lowers the viscosity of the phenolic resin, and an excessively large additive amount also causes excessive foaming, leading to rupturing of cells in the foam. This reduces the closed cell ratio and lowers physical properties such as long-term thermal insulation performance and compressive strength.

In the present embodiment, an inorganic gas such as nitrogen or argon is preferably added with the compound $\alpha$ as a cell nucleating agent to remediate a decrease in the closed cell ratio and compressive strength associated with plasticization of the phenolic resin. The additive amount of the inorganic gas in terms of mass relative to the total amount of the compound $\alpha$ and/or the hydrocarbon is preferably at least 0.05% and no greater than 5.0%, more preferably at least 0.05% and no greater than 3.0%, even more preferably at least 0.1% and no greater than 2.5%, particularly preferably at least 0.1% and no greater than 1.5%, and most preferably at least 0.3% and no greater than 1.0%. An additive amount of less than 0.05% is unfavorable because the action as a cell nucleating agent is inadequate, whereas an additive amount of greater than 5.0% is unfavorable because it causes an excessively high foaming pressure in a foaming and curing process of the phenolic resin foam, leading to rupturing of cells in the foam and formation of poor quality foam having a low closed cell ratio and compressive strength.

The nitrogen-containing compound may be any of the previously described examples.

The nitrogen-containing compound may, as is commonly known, be directly added partway through reaction of the phenolic resin or near to the end point of this reaction, or may be reacted with formaldehyde in advance before being mixed with the phenolic resin.

Although the content of the nitrogen-containing compound is not specifically limited, from a viewpoint of reducing spreading of the aldehyde group-containing compound or derivative thereof from the phenolic resin foam and from a viewpoint of flexibility of the phenolic resin foam, the content of the nitrogen-containing compound relative to the total amount (100 mass%) of the phenolic resin is preferably at least 1 mass% and no greater than 15 mass%, more preferably at least 2 mass% and no greater than 10 mass%, and particularly preferably at least 3 mass% and no greater than 8 mass%.

Examples of the plasticizer include phthalic acid esters and glycols such as ethylene glycol and diethylene glycol. Of these examples, phthalic acid esters are preferable. Moreover, an aliphatic hydrocarbon, alicyclic hydrocarbon, or mixture thereof may be used. One plasticizer may be used individually, or two or more plasticizers may be used in combination.

Examples of the flame retardant include commonly used bromine compounds such as tetrabromobisphenol A and decabromodiphenyl ether, aromatic phosphoric acid esters, aromatic condensed phosphoric acid esters, halogenated phosphoric acid esters, phosphorus and phosphorus compounds such as red phosphorus, ammonium polyphosphate, and antimony compounds such as antimony trioxide and antimony pentoxide. One flame retardant may be used individually, or two or more flame retardants may be used in combination.

Examples of the surfactant include surfactants that are commonly used in production of phenolic resin foam. Of such surfactants, non-ionic surfactants are effective and preferable examples include a polyalkylene oxide that is a copolymer of ethylene oxide and propylene oxide, a condensate of an alkylene oxide and castor oil, a condensate of an alkylene oxide and an alkylphenol such as nonylphenol or dodecylphenol, a polyoxyethylene alkyl ether in which the alkyl ether part has a carbon number of 14 to 22, a fatty acid ester such as a polyoxyethylene fatty acid ester, a silicone-based compound such as polydimethylsiloxane, and a polyalcohol. These surfactants may be used individually or as a combination of two or more types.

Although the amount of the surfactant that is used is not specifically limited, the amount relative to 100 parts by mass of the phenolic resin is preferably at least 0.3 parts by mass and no greater than 10 parts by mass.

The curing catalyst may be any acidic curing catalyst that enables curing of the phenolic resin and is, for example, preferably an anhydrous acid curing catalyst. The anhydrous acid curing catalyst is preferably anhydrous phosphoric acid or an anhydrous arylsulfonic acid. Examples of the anhydrous arylsulfonic acid include toluenesulfonic acid, xylenesulfonic acid, phenolsulfonic acid, substituted phenolsulfonic acid, xylenolsulfonic acid, substituted xylenolsulfonic acid, dodecylbenzenesulfonic acid, benzenesulfonic acid, and naphthalenesulfonic acid. One curing catalyst may be used individually, or two or more curing catalysts may be used in combination. The curing catalyst may be diluted with a solvent such as ethylene glycol or diethylene glycol.

Although the amount of the curing catalyst that is used is not specifically limited, the amount relative to 100 parts by mass of the phenolic resin is preferably at least 3 parts by mass and no greater than 30 parts by mass. Moreover, the amount of the curing catalyst relative to the total amount (100 parts by mass) of the phenolic resin and the surfactant may be at least 3 parts by mass and no greater than 30 parts by mass.

Examples of the curing aid include resorcinol, cresol, saligenin (o-methylolphenol), and p-methylolphenol. One curing aid may be used individually, or two or more curing aids may be used in combination.

The foamable phenolic resin composition may be obtained, for example, by mixing the phenolic resin, the surfactant, the compound α, the hydrocarbon, the curing catalyst, the nitrogen-containing compound, the plasticizer, and other materials, but is not specifically limited to being obtained in this manner.

The phenolic resin foam may be obtained, for example, through a continuous production process including continuously discharging the foamable phenolic resin composition onto a moving surface material, covering the foamable phenolic resin composition with another surface material at an opposite surface of the foamable phenolic resin composition to a surface that is in contact with the surface material onto which the foamable phenolic resin composition has been discharged, and foaming and heat curing the foamable phenolic resin composition. According to another embodiment, the phenolic resin foam may be obtained by a batch production process in which the foamable phenolic resin composition is poured into a frame covered by a surface material at the inside thereof or a frame having a mold release agent applied thereon, and is then foamed and heat cured. The phenolic resin foam obtained by this batch production process may be sliced in a thickness direction for use as necessary.

In the present specification, a laminate in which phenolic resin foam is stacked on a surface material (i.e., a laminate including a surface material and phenolic resin foam) may also be referred to as a phenolic resin foam laminate. The phenolic resin foam laminate may include one surface material or may include two surface materials (upper surface material and lower surface material) that are respectively disposed on a first surface (upper surface) and a second surface (lower surface) of the phenolic resin foam. The surface material(s) are preferably in contact with the phenolic resin foam.

Although the surface material(s) are not specifically limited, a gas permeable surface material is preferable from a viewpoint of improving the closed cell ratio by removing moisture generated during foaming and curing of the foamable phenolic resin composition (for example, moisture contained in the phenolic resin and moisture produced in the curing reaction (dehydration condensation reaction)) so as to prevent cell rupturing due to water vapor becoming contained in cells and the internal pressure of these cells becoming excessively high. Examples of gas permeable surface materials that can be used include synthetic fiber nonwoven fabrics such as nonwoven fabrics made of polyesters (for example, nonwoven fabric made of polyethylene terephthalate) and nonwoven fabrics made of polyamides (for example, nonwoven fabric made of nylon), glass fiber nonwoven fabrics, glass fiber paper, paper, and metal films having through holes (for example, a reinforced laminate of a metal foil having through holes pasted together with paper, glass cloth, or glass fiber). Of such materials, PET fiber nonwoven fabrics, glass fiber nonwoven fabrics, and aluminum having through holes are preferable from a viewpoint of flame retardance, surface material adhesion strength, and prevention of foamable phenolic resin composition seepage. A metal film having through holes can be produced through processing such as opening of holes that pass through the metal film in a thickness direction. In the phenolic resin foam laminate, as a result of the gas permeable surface material(s) facilitating the release of moisture from the phenolic resin foam during foaming and curing, rupturing of cells due to water vapor can be inhibited. In view of the above, the phenolic resin foam preferably has a surface material on both the first surface (upper surface) and the second surface (lower surface) thereof, and these surface materials are preferably both gas permeable.

The term "gas permeable surface material" is used to refer to a surface material having an oxygen transmission rate of at least 4.5 $cm^3/24$ h·$m^2$ as measured in accordance with ASTM D3985-95.

It is preferable that the surface material(s) are flexible to prevent breaking of the surface material(s) during production. Examples of flexible surface materials that can be used include synthetic fiber nonwoven fabrics, synthetic fiber woven fabrics, glass fiber paper, glass fiber woven fabrics, glass fiber nonwoven fabrics, glass fiber mixed paper, paper, metal films (metal films having through holes), and combinations thereof. The surface material(s) may contain a flame retardant to impart flame retardance. Examples of the flame retardant include bromine compounds such as tetrabromobisphenol A and decabromodiphenyl ether, aromatic phosphoric acid esters, aromatic condensed phosphoric acid esters, halogenated phosphoric acid esters, phosphorus and phosphorus compounds such as red phosphorus, ammonium polyphosphate, antimony compounds such as antimony trioxide and antimony pentoxide, metal hydroxides such as aluminum hydroxide and magnesium hydroxide, and carbonates such as calcium carbonate and sodium carbonate. The flame retardant may be kneaded into fibers of the surface material(s), or may be added in an acrylic, polyvinyl alcohol, vinyl acetate, epoxy, unsaturated polyester, or other surface material binder. Moreover, the surface material(s) may be surface treated with a water repellant based on a fluororesin, a silicone resin, a wax emulsion, paraffin, a combination of an acrylic resin and paraffin wax, or the like or an asphalt-based waterproofing agent. These water repellants and water proofing agents may be used individually, and may be applied onto the surface material(s) after addition of the flame retardant thereto.

The temperature of the foamable phenolic resin composition during discharge of the foamable phenolic resin composition onto a surface material is, for example, preferably at least 25°C and no higher than 50°C, and more preferably at least 30°C and no higher than 45°C. A temperature of no higher than 50°C enables an appropriate degree of foaming so that a smooth foam board is obtained. A temperature of at least 25°C enables an appropriate degree of curing so that foaming and curing occur in a good balance.

A foamable phenolic resin composition sandwiched between two surface materials can be foamed between these two surface materials. The foamed phenolic resin composition (foam) can be cured, for example, using a first oven and a second oven as described below.

The first oven may, for example, be used to perform foaming and curing in an atmosphere having a temperature of at least 60°C and no higher than 110°C using an endless steel belt-type double conveyor or a slat-type double conveyor. The uncured foam may be cured in the first oven while forming the foam into a board shape to obtain partially cured foam. The inside of the first oven may have a uniform temperature throughout or may include a plurality of temperature zones.

The second oven preferably generates hot air having a temperature of at least 70°C and no higher than 120°C to post cure the foam that has been partially cured in the first oven. Partially cured phenolic resin foam boards may be stacked with a fixed interval in-between using a spacer or tray. If the temperature in the second oven is too high, this induces cell rupturing due to the internal pressure of cells in the foam becoming excessively high. On the other hand, if the temperature in the second oven is too low, this may necessitate an excessively long time for reaction of the phenolic resin to progress. Accordingly, a temperature of at least 80°C and no higher than 110°C is more preferable.

In the first and second ovens, the internal temperature of the phenolic resin foam is preferably at least 60°C and no higher than 105°C, more preferably at least 70°C and no higher than 100°C, even more preferably at least 75°C and no higher than 95°C, and most preferably at least 75°C and no higher than 90°C. The internal temperature of the phenolic resin foam can be measured, for example, through insertion of a thermocouple and a data recorder into the foamable phenolic resin composition inside the oven.

When the compound $\alpha$ is used, there is a concern that an increase in viscosity associated with curing reaction of the phenolic resin in the foaming and curing process may be cancelled out due to plasticization of the phenolic resin through high miscibility of the compound $\alpha$ with the phenolic resin. As a result, it may not be possible to provide the phenolic resin foam with adequate hardness through oven heating in the same way as in a conventional technique. Therefore, it is preferable that the total residence time in the first and second ovens is long compared to a situation in which a conventional hydrocarbon is used. The total residence time in the first and second ovens is, for example, preferably at least 3 minutes and no greater than 60 minutes, more preferably at least 5 minutes and no greater than 45 minutes, particularly preferably at least 5 minutes and no greater than 30 minutes, and most preferably at least 7 minutes and no greater than 20 minutes. If the residence time in the ovens is too short, the phenolic resin foam exits the ovens in an uncured state, resulting in formation of poor quality phenolic resin foam having poor dimensional stability. An excessively long residence time in the ovens is unfavorable because drying of the phenolic resin foam may progress too far such that the water content of the phenolic resin foam becomes too low. As a consequence, the phenolic resin foam may take in a large amount of water vapor from the atmosphere after exiting the ovens, leading to board warping.

Note that the method of foaming and curing the foamable phenolic resin composition to obtain the phenolic resin foam according to the present embodiment is not limited to the method set forth above.

The disclosed phenolic resin foam can be used as an insulating material or the like for housing construction material applications, manufacturing applications, or industrial applications.

Through the production method according to the present embodiment set forth above, it is possible to provide a phenolic resin foam having low environmental impact, high compressive strength, excellent handling properties in installation, and low costs associated with securing.

EXAMPLES

The following provides a more specific description of the disclosed techniques based on examples and comparative examples. However, the disclosed techniques are not limited to the following examples.

(Evaluation)

Phenolic resins and phenolic resin foams in the examples and comparative examples were measured and evaluated with respect to the following criteria.

(1) Identification of type of compound $\alpha$ and/or hydrocarbon in phenolic resin foam

First, chlorinated hydrofluoroolefin, non-chlorinated hydrofluoroolefin, and halogenated hydrocarbon standard gases were used to determine retention times under the GC/MS measurement conditions shown below.

Surface materials were peeled from phenolic resin foam laminates obtained in the examples and comparative examples. A sample of approximately 10 g of each phenolic resin foam and a metal file were placed in a 10 L container (product name: Tedlar Bag), the container was tightly sealed, and 5 L of nitrogen was injected therein. The sample was scraped and finely ground with use of the file through the Tedlar Bag. Next, the sample was left for 10 minutes in a temperature controller adjusted to 81°C while still in the Tedlar Bag. A 100 μL sample of gas generated in the Tedlar Bag was collected and analyzed by GC/MS under the measurement conditions shown below to identify the type of compound $\alpha$ and/or hydrocarbon in the phenolic resin foam.

The GC/MS analysis results were used to confirm the presence or absence of a chlorinated hydrofluoroolefin, non-chlorinated hydrofluoroolefin, and/or halogenated hydrocarbon. Moreover, the pre-determined retention times and the obtained mass spectrum were used to identify the type of chlorinated hydrofluoroolefin, non-chlorinated hydrofluoroolefin, and/or halogenated hydrocarbon. The retention times and the mass spectrum were also used to determine the type of hydrocarbon. Separately, the detection sensitivities of the generated gas components were each measured through use of a standard gas, and the composition ratio was calculated from the detected region area and the detection sensitivity of each gas component obtained by GC/MS. The mass ratio of each identified gas component was calculated from the composition ratio and the molar mass of each gas component.

(GC/MS measurement conditions)

Gas chromatograph: Agilent 7890 produced by Agilent Technologies

Column: InertCap 5 produced by GL Sciences Inc. (inner diameter: 0.25 mm, thickness: 5 $\mu$m, length: 30 m)
Carrier gas: Helium
Flow rate: 1.1 mL/min
Injection port temperature: 150°C
Injection method: Split method (1:50)
Sample injection amount: 100 $\mu$L
Column temperature: Maintained at -60°C for 5 minutes, raised to 150°C at 50°C/min, and maintained at 150°C for 2.8 minutes
Mass spectrometer: Q1000GC produced by JEOL Ltd.
Ionization method: Electron ionization (70 eV)
Scan range: m/Z = 10 to 500
Voltage: -1300 V
Ion source temperature: 230°C
Interface temperature: 150°C

(2) Foam density

A 20 cm square board was cut out from each of the phenolic resin foam laminates obtained in the examples and comparative examples. Surface materials were removed from the cut-out board, and then the mass and apparent volume of the phenolic resin foam were measured. The determined mass and apparent volume were used to calculate the density (apparent density) in accordance with JIS K 7222.

(3) Closed cell ratio

The closed cell ratio was measured by the following method with reference to ASTM D 2856-94(1998)A.
An approximately 25 mm cube specimen was cut out from a central portion, in terms of a thickness direction, of the phenolic resin foam in each of the phenolic resin foam laminates obtained in the examples and comparative examples. In a situation in which the phenolic resin foam laminate was thin and it was not possible to obtain a specimen having a uniform thickness of 25 mm, a specimen having a uniform thickness was obtained by slicing approximately 1 mm from each surface of the approximately 25 mm cube specimen that had been cut out. The length of each side of the specimen was measured using a Vernier caliper to determine the apparent volume (V1: cm$^3$), and the mass of the specimen (W: to four significant figures; g) was measured. Subsequently, the closed space volume (V2: cm$^3$) of the specimen was measured using an air pycnometer (Tokyo Science Co., Ltd., product name: MODEL1000) in accordance with Procedure A in ASTM D 2856.
The average cell diameter (t: cm) was measured by the previously described measurement method in "(3) Average cell diameter". The surface area (A: cm$^2$) of the specimen was determined from the side lengths of the specimen.
The open volume (VA: cm$^3$) of cut cells at the surface of the specimen was calculated from t and A according to a formula: VA = (A $\times$ t)/1.14. The density of the solid phenolic resin was taken to be 1.3 g/cm$^3$ and the volume (VS: cm$^3$) of a solid portion constituting cell walls contained in the specimen was calculated according to a formula: VS = specimen mass (W)/1.3.
The closed cell ratio was calculated by the following formula (1).

$$\text{Closed cell ratio (\%)} = [(V2 - VS)/(V1 - VA - VS)] \times 100 \qquad (1)$$

This measurement was conducted six times for foam samples obtained under the same production conditions, and the average value was taken to be a representative value.

(4) 10% compressive strength

A specimen of 100 mm in length and 100 mm in width was cut out from each of the phenolic resin foam laminates obtained in the examples and comparative examples, and surface materials were removed from the specimen. The resultant specimen was conditioned in an atmosphere having a temperature of 23°C and a relative humidity of 50% until the difference between weighed values taken at intervals of 24 hours was no greater than 0.1%. The 10% compressive strength of the conditioned specimen was determined in accordance with JIS K 7220.

(5) Absolute value of amount of dimensional change after 3 dry-wet cycles

A specimen of 300 mm in length and 300 mm in width was cut out from each of the phenolic resin foam laminates obtained in the examples and comparative examples, and surface materials were removed from the specimen. The resultant specimen was left for 2 weeks in an atmosphere having a temperature of 23°C and a relative humidity of 50%. Thereafter, dimensions of the specimen in width (W) and length (L) directions were measured to obtain dimensions $A_{0W}$ and $A_{0L}$ at the start of testing. The specimen was left in an atmosphere having a temperature of 50°C and a relative humidity of 95% for 12 hours from the start of testing, and was then left in an atmosphere having a temperature of 50°C and a relative humidity of 35% from 12 hours after the start of testing until 24 hours after the start of testing. The period from the start of testing until 24 hours had passed was taken to be 1 cycle, and the specimen was left until 3 cycles had been completed in this manner. Note that once 3 cycles had been completed, 72 hours had passed from the start of testing. Dimensions of the specimen after completion of 3 cycles (i.e., 72 hours after the start of testing) were measured in width (W) and length (L) directions to obtain $A_{72W}$ and $A_{72L}$. The absolute value of the amount of dimensional change after three dry-wet cycles was calculated through the following formulae (2) and (3). Note that the "absolute value of the amount of dimensional change after three dry-wet cycles" refers to whichever is larger out of the absolute value of the amount of dimensional change in the length direction and the absolute value of the amount of dimensional change in the width direction. Note that the width and length directions of the specimen are directions perpendicular to the product thickness direction.

$$\text{Absolute value of amount of dimensional change in width direction} \\ \text{after three dry-wet cycles} = |A_{72W} - A_{0W}| \qquad (2)$$

$$\text{Absolute value of amount of dimensional change in length direction} \\ \text{after three dry-wet cycles} = |A_{72L} - A_{0L}| \qquad (3)$$

(6) Brittleness

Brittleness was calculated as follows in accordance with JIS A 9511(2003)5.1.4. A surface material at the surface of each phenolic resin foam laminate obtained in the examples and comparative examples was peeled off and 12 specimens were prepared by cutting out 25 $\pm$1.5 mm cubes such as to include the surface from which the surface material had been peeled at one surface thereof. The mass of these specimens was measured with a precision of $\pm$1%. An oak wooden box having an internal size of 191 mm $\times$ 197 mm $\times$ 197 mm was used as a test device. A door was attached at one side of the box to enable tight sealing such that dust could not escape from the box. Moreover, a shaft was attached to the outside of the box in a central portion of a 197 mm surface thereof such that the box was rotatable at 60 $\pm$2 rpm. The specimens were tightly sealed in the measurement device with 24 oak dice having a dry specific gravity of 0.65 and a size of 19 $\pm$0.8 mm, and then the wooden box was rotated 600 $\pm$3 times. After this rotation, the contents of the box were carefully transferred onto a mesh having a JIS Z 8801 sieve nominal size of 9.5 mm. The contents were sifted to remove fragments, and then the specimens remaining on the mesh were collected and the mass thereof was measured. The brittleness was determined according to the following formula.

$$\text{Brittleness (\%)} = 100 \times (m_0 - m_1)/m_0$$

(In the above formula, mo is the pre-test specimen mass (g) and $m_1$ is the post-test specimen mass (g).)

(7) Weight average molecular weight Mw of phenolic resin

The weight average molecular weight Mw of each of the phenolic resins used in the examples and comparative examples was determined through gel permeation chromatography (GPC) under the following measurement conditions and through use of a calibration curve obtained using the standard substances shown below (standard polystyrene, 2-hydroxybenzyl alcohol, and phenol).

Pre-treatment:

A measurement solution was prepared by dissolving approximately 10 mg of the phenolic resin in 1 mL of N,N-dimethylformamide (produced by Wako Pure Chemical Industries, Ltd., high performance liquid chromatograph use), and then filtering the resultant solution through a 0.2 $\mu$m membrane filter.

Measurement conditions:

Measurement device: Shodex System 21 (produced by Showa Denko K.K.)
Column: Shodex Asahipak GF-310HQ (7.5 mm I.D. $\times$ 30 cm)
Eluent: Solution of 0.1 mass% of lithium bromide in N,N-dimethylformamide (produced by Wako Pure Chemical Industries, Ltd., high performance liquid chromatograph use)
Flow rate: 0.6 mL/min
Detector: RI detector
Column temperature: 40°C
Standard substances: Standard polystyrene (Shodex standard SL-105 produced by Showa Denko K.K.), 2-hydroxybenzyl alcohol (produced by Sigma-Aldrich Co. LLC., 99% grade), and phenol (produced by Kanto Kagaku, special grade)

(8) Viscosity of phenolic resin at 40°C

Phenolic resin was measured out in an amount of 0.5 mL and was set in a rotational viscometer (R-100 produced by Toki Sangyo Co., Ltd., rotor: 3° $\times$ R-14). The rotational speed of the rotor was set such that the viscosity of the phenolic resin being measured was within a range of 50% to 80% of the viscosity upper measurement limit of the viscometer. The measurement temperature was set as 40°C. A value of the viscosity 3 minutes after starting measurement was taken to be the measured value.

(9) Viscosity increase rate constant

With respect to each of the phenolic resins used in the examples and comparative examples, a curing catalyst comprising 70 mass% of xylenesulfonic acid and 30 mass% of diethylene glycol was precisely weighed and added to 10 g of the phenolic resin in an amount of 10 mass% relative to the phenolic resin. The phenolic resin and the curing catalyst were thoroughly mixed for 1 minute at 20°C.
The mixture of the phenolic resin and the curing catalyst was set in a rotational viscometer (R-100 produced by Toki Sangyo Co., Ltd., rotor: 3° $\times$ R-14) in an amount of 0.5 mL and the viscosity of this mixture at 40°C was measured at 30 second intervals. The measurement results were used to make a semi-logarithmic plot with time from the start of viscosity measurement (minutes) on the x-axis and the logarithm of viscosity (mPa·s) on the y-axis. The period from 4 minutes to 10 minutes was taken to be a straight line and the gradient (1/min) of this line was determined. The determined gradient was taken to be a viscosity increase rate constant.

(10) tan $\delta$

A 50 mm $\varphi$ aluminum parallel plate jig was installed in a viscoelasticity measuring device (product name: ARES, produced by TA Instruments). Approximately 2 mL of phenolic resin was set on a lower parallel plate of the two parallel plates positioned at upper and lower positions. Thereafter, a gap between the parallel plates was set as 0.5 mm and any resin that seeped from the periphery of the parallel plates was removed using a spatula. Next, an oven was set up such as to surround the parallel plates. The value of tan $\delta$ was measured at temperature settings of 40°C, 50°C, and 60°C using the measurement conditions described below. The value of tan $\delta$ was determined to be a value that was taken 5 minutes after the set temperature was reached.
Measurement was performed with a gap between upper and lower parallel plates of 0.5 mm, a strain of 10%, and a frequency of 50 Hz. The measurement temperature was adjusted by adjusting the oven temperature such that among thermocouples positioned inside the oven and at a rear surface of the lower parallel plate, the thermocouple positioned at the rear of the lower parallel plate was at a specific temperature.
A graph was prepared by plotting the obtained values of tan $\delta$ at 40°C, tan $\delta$ at 50°C, and tan $\delta$ at 60°C with temperature on the horizontal axis and tan $\delta$ on the vertical axis of the graph.

<Synthesis of phenolic resin A>

A reactor was charged with 3500 kg of a 52 mass% formaldehyde aqueous solution and 2743 kg of 99 mass% phenol, and was stirred using a rotating propeller stirrer. The liquid temperature inside the reactor was adjusted to 40°C using a temperature controller. Next, a 50 mass% sodium hydroxide aqueous solution was added until the pH of the reaction liquid was adjusted to 8.7. The temperature of the reaction liquid was raised to 85°C over 1.5 hours. Thereafter, at a stage at which the Ostwald viscosity of the reaction liquid reached 73 centistokes (= 73 $\times$ 10$^{-6}$ m$^2$/s, measured value at 25°C), the reaction liquid was cooled and 400 kg of urea was added thereto. Thereafter, the reaction liquid was cooled to 30°C and a 50 mass% aqueous solution of p-toluenesulfonic acid monohydrate was added until the pH of the reaction liquid was adjusted to 6.4. The resultant reaction liquid was subjected to concentrating treatment using a thin film evaporator until the moisture percentage of the phenolic resin reached 7.4 mass%. This concentrating treatment resulted in a viscosity at 40°C of 22,000 mPa·s.

Phenolic resins B to L were obtained in the same way as the phenolic resin A with the exception that the charged amount of the 52 mass% formaldehyde aqueous solution, the charged amount of the 99 mass% phenol, the Ostwald viscosity, the additive amount of urea, and the viscosity at 40°C after adjustment of the moisture percentage of the phenolic resin using the thin film evaporator were changed as shown in Table 1.

Table 1

| | Resin A | Resin B | Resin C | Resin D | Resin E | Resin F | Resin G | Resin H | Resin I | Resin J | Resin K | Resin L |
|---|---|---|---|---|---|---|---|---|---|---|---|---|
| Charged amount of phenol [kg] | 2743.0 | 2743.0 | 2743.0 | 2743.0 | 2743.0 | 2743.0 | 2743.0 | 2743.0 | 2743.0 | 2743.0 | 2743.0 | 2743.0 |
| Charged amount of formalin [kg] | 3500.0 | 3500.0 | 3500.0 | 3500.0 | 3333.4 | 3333.4 | 3333.4 | 3500.0 | 3500.0 | 3500.0 | 3500.0 | 3500.0 |
| Formalin/Phenol | 2.1 | 2.1 | 2.1 | 2.1 | 2.0 | 2.0 | 2.0 | 2.1 | 2.1 | 2.1 | 2.1 | 2.1 |
| Ostwald viscosity [$10^{-6}$ $m^2$/s] | 73 | 73 | 47 | 47 | 190 | 190 | 380 | 73 | 73 | 28 | 420 | 420 |
| Additive amount of urea [kg] | 400 | 400 | 430 | 500 | 307 | 200 | 307 | 0 | 400 | 430 | 430 | 430 |
| Additive ratio of urea [mass% relative to phenolic resin] | 5.8 | 5.8 | 6.2 | 7.1 | 4.6 | 3.0 | 4.6 | 0 | 5.8 | 6.2 | 6.2 | 6.2 |
| Weight average molecular weight | 910 | 910 | 530 | 530 | 2200 | 2200 | 2940 | 910 | 910 | 320 | 3250 | 3000 |
| Viscosity at 40° C [mPa·s] | 22000 | 10000 | 10000 | 10000 | 20000 | 20000 | 20000 | 22000 | 900 | 20000 | 20000 | 60000 |
| Viscosity increase rate constant [1/min] | 0.12 | 0.12 | 0.09 | 0.05 | 0.28 | 0.48 | 0.32 | 0.55 | 0.12 | 0.13 | 0.21 | 0.26 |
| tan $\delta$ at 40°C | 12.3 | 17.4 | 22.2 | 24.1 | 4.3 | 3.4 | 3.6 | 15.4 | 20.3 | 28.1 | 1.3 | 0.4 |
| 0°C | 28.1 | 26.5 | 42.4 | 44.8 | 9.2 | 8.8 | 8.9 | 30.2 | 41.3 | 48.3 | 2.8 | 0.8 |
| tan $\delta$ at 60°C | 46.6 | 42.9 | 45.1 | 48.7 | 10.9 | 9.5 | 8.1 | 38.4 | 51.1 | 54.6 | 4.2 | 1.8 |

(Example 1)

A mixture containing an ethylene oxide-propylene oxide block copolymer and polyoxyethylene dodecylphenyl ether in mass proportions of 50 mass% each was mixed as a surfactant with the phenolic resin A in a ratio of 2.0 parts by mass per 100 parts by mass of the phenolic resin A. Next, 11 parts by mass of a compound A shown in Table 2 and 14 parts by mass of a mixture comprising 80 mass% of xylenesulfonic acid as a curing catalyst and 20 mass% of diethylene glycol were added per 100 parts by mass of the phenolic resin mixed with the surfactant, and then mixing was performed with a mixing head adjusted to 25°C to yield a foamable phenolic resin composition.

The obtained foamable phenolic resin composition was supplied onto a moving surface material (lower surface material). The foamable phenolic resin composition supplied onto the surface material was covered with another surface material (upper surface material) at the opposite surface thereof to a surface in contact with the lower surface material and was simultaneously introduced into a first oven having a slat-type double conveyor heated to 85°C in a sandwiched state between the two surface materials. The foamable phenolic resin composition was cured for a residence time of 15 minutes and was then further cured for 2 hours in a 110°C oven to form a phenolic resin foam and thereby obtain a phenolic resin foam laminate in which the phenolic resin foam was stacked on the surface materials.

Glass fiber nonwoven fabric (product name: Dura-Glass Type DH70 (weight per unit area: 70 g/m$^2$), produced by Johns Manville Corporation) was used for both the upper surface material and the lower surface material.

Table 2

| Compound type | A | B | C | D | E | F | G | H | I | J | K | L | M | N | O | P | Q | R | S | T | U | V | W | X | Y | Z |
|---|---|---|---|---|---|---|---|---|---|---|---|---|---|---|---|---|---|---|---|---|---|---|---|---|---|---|
| First component of compound | 1-Chloro-3,3,3-trifluoro propene | 1,3,3,3-Tetrafluoro-1-propene | 2,3,3,3-Tetrafluoro-1-propene | 1,1,1,4,4,4-Hexafluoro-2-butene | Isopropyl chloride | 1-Chloro-3,3,3-trifluoro propene | 1-Chloro-3,3,3-trifluoro propene | 1-Chloro-3,3,3-trifluoro propene | 1-Chloro-3,3,3-trifluoro propene | 1-Chloro-3,3,3-trifluoro propene / Isopropyl chloride | 1,3,3,3-Tetrafluoro-1-propene / Isopropyl chloride | 1-Chloro-3,3,3-trifluoro propene / Isopropyl chloride | 1,3,3,3-Tetrafluoro-1-propene / Isopropyl chloride | 1-Chloro-3,3,3-trifluoro propene | 1-Chloro-3,3,3-trifluoro propene / Isopropyl chloride | 2-Chloro-3,3,3-trifluoro propene / Isopropyl chloride | 1-Chloro-3,3,3-trifluoro propene | 1-Chloro-3,3,3-trifluoro propene / Isopropyl chloride | 1-Chloro-3,3,3-trifluoro propene / 1,3,3,3-Tetrafluoro-1-propene | 1-Chloro-3,3,3-trifluoro propene / Isopropyl chloride | 1,3,3,3-Tetrafluoro-1-propene | 1,3,3,3-Tetrafluoro-1-propene / Isopropyl chloride | 1,1,1,4,4,4-Hexafluoro-2-butene | 1,1,1,4,4,4-Hexafluoro-2-butene / Isopropyl chloride | 1,1,1,4,4,4-Hexafluoro-2-butene / Isopropyl chloride | 1,1,1,4,4,4-Hexafluoro-2-butene / 1,3,3,3-Tetrafluoro-1-propene |
| Second component of compound | - | - | - | - | - | Cyclopentane | Cyclopentane | Cyclopentane | Isopentane | - | - | Isopentane | Isopentane | Isobutane | - | - | Isopentane | - | - | Cyclopentane | Cyclopentane | - | Cyclopentane | - | - | - |
| Mass ratio of compound components | 1-Chloro-3,3,3-trifluoro propene = 100 | 1,3,3,3-Tetrafluoro-1-propene = 100 | 2,3,3,3-Tetrafluoro-1-propene = 100 | 1,1,1,4,4,4-Hexafluoro-2-butene = 100 | Isopropyl chloride = 100 | 1-Chloro-3,3,3-trifluoro propene/Cyclopentane = 30/70 | 1-Chloro-3,3,3-trifluoro propene/Cyclopentane = 90/10 | 1-Chloro-3,3,3-trifluoro propene/Cyclopentane = 50/50 | 1-Chloro-3,3,3-trifluoro propene/Isopentane = 85/15 | 1-Chloro-3,3,3-trifluoro propene/Isopropyl chloride = 85/15 | 1,3,3,3-Tetrafluoro-1-propene/Isopropyl chloride = 85/15 | 1-Chloro-3,3,3-trifluoro propene/Isopropyl chloride/Isopentane = 50/40/10 | 1,3,3,3-Tetrafluoro-1-propene/Isopropyl chloride/Isopentane = 50/40/10 | 1-Chloro-3,3,3-trifluoro propene/Isobutane = 90/10 | 1-Chloro-3,3,3-trifluoro propene/Isopropyl chloride = 20/80 | 2-Chloro-3,3,3-trifluoro propene/Isopropyl chloride = 20/80 | 1-Chloro-3,3,3-trifluoro propene/Isopentane = 20/80 | 1-Chloro-3,3,3-trifluoro propene/Isopropyl chloride = 50/50 | 1-Chloro-3,3,3-trifluoro propene/1,3,3,3-Tetrafluoro-1-propene = 80/20 | 1-Chloro-3,3,3-trifluoro propene/Isopropyl chloride/1,3,3,3-Tetrafluoro-1-propene/Cyclopentane = 10/80/10 | 1,3,3,3-Tetrafluoro-1-propene/Cyclopentane = 20/80 | 1,3,3,3-Tetrafluoro-1-propene/Isopropyl chloride = 20/80 | 1,1,1,4,4,4-Hexafluoro-2-butene/Cyclopentane = 80/20 | 1,1,1,4,4,4-Hexafluoro-2-butene/Isopropyl chloride = 80/20 | 1,1,1,4,4,4-Hexafluoro-2-butene/Isopropyl chloride = 20/80 | 1,1,1,4,4,4-Hexafluoro-2-butene/1,3,3,3-Tetrafluoro-1-propene = 80/20 |

19

(Example 2)

A phenolic resin foam and a phenolic resin foam laminate were obtained in the same way as in Example 1 with the exception that a compound B was used instead of the compound A and 9 parts by mass of the compound B was added per 100 parts by mass of the phenolic resin mixed with the surfactant.

(Example 3)

A phenolic resin foam and a phenolic resin foam laminate were obtained in the same way as in Example 1 with the exception that a compound C was used instead of the compound A and 8.5 parts by mass of the compound C was added per 100 parts by mass of the phenolic resin mixed with the surfactant.

(Example 4)

A phenolic resin foam and a phenolic resin foam laminate were obtained in the same way as in Example 1 with the exception that a compound D was used instead of the compound A, 14 parts by mass of the compound D was added per 100 parts by mass of the phenolic resin mixed with the surfactant, and a nonwoven fabric made of polyester (product name: Spunbond E05030 (weight per unit area: 30 g/m$^2$), produced by Asahi Kasei Corporation, Fibers and Textiles SBU) was used for the upper surface material and the lower surface material.

(Example 5)

A phenolic resin foam and a phenolic resin foam laminate were obtained in the same way as in Example 1 with the exception that a compound E was used instead of the compound A and 6 parts by mass of the compound E was added per 100 parts by mass of the phenolic resin mixed with the surfactant.

(Example 6)

A phenolic resin foam and a phenolic resin foam laminate were obtained in the same way as in Example 1 with the exception that a compound F was used instead of the compound A and 8 parts by mass of the compound F was added per 100 parts by mass of the phenolic resin mixed with the surfactant.

(Example 7)

A phenolic resin foam and a phenolic resin foam laminate were obtained in the same way as in Example 1 with the exception that a compound G was used instead of the compound A and 11 parts by mass of the compound G was added per 100 parts by mass of the phenolic resin mixed with the surfactant.

(Example 8)

A phenolic resin foam and a phenolic resin foam laminate were obtained in the same way as in Example 1 with the exception that the phenolic resin B was used as the phenolic resin, 11 parts by mass of the compound A was added per 100 parts by mass of the phenolic resin mixed with the surfactant, and a nonwoven fabric made of polyester (product name: Spunbond E05030 (weight per unit area: 30 g/m$^2$), produced by Asahi Kasei Corporation, Fibers and Textiles SBU) was used for the upper surface material and the lower surface material.

(Example 9)

A phenolic resin foam and a phenolic resin foam laminate were obtained in the same way as in Example 1 with the exception that the phenolic resin C was used as the phenolic resin, 11 parts by mass of the compound A was added per 100 parts by mass of the phenolic resin mixed with the surfactant, and a nonwoven fabric made of polyester (product name: Spunbond E05030 (weight per unit area: 30 g/m$^2$), produced by Asahi Kasei Corporation, Fibers and Textiles SBU) was used for the upper surface material and the lower surface material.

(Example 10)

A phenolic resin foam and a phenolic resin foam laminate were obtained in the same way as in Example 1 with the exception that the phenolic resin D was used as the phenolic resin and 12 parts by mass of the compound A was added per 100 parts by mass of the phenolic resin mixed with the surfactant.

(Example 11)

A phenolic resin foam and a phenolic resin foam laminate were obtained in the same way as in Example 1 with the exception that the phenolic resin D was used as the phenolic resin, the compound F was used instead of the compound A, and 6 parts by mass of the compound F was added per 100 parts by mass of the phenolic resin mixed with the surfactant.

(Example 12)

A phenolic resin foam and a phenolic resin foam laminate were obtained in the same way as in Example 1 with the exception that the phenolic resin E was used as the phenolic resin and 12 parts by mass of the compound A was added per 100 parts by mass of the phenolic resin mixed with the surfactant.

(Example 13)

A phenolic resin foam and a phenolic resin foam laminate were obtained in the same way as in Example 1 with the exception that the phenolic resin E was used as the phenolic resin, the compound D was used instead of the compound A, and 15 parts by mass of the compound D was added per 100 parts by mass of the phenolic resin mixed with the surfactant.

(Example 14)

A phenolic resin foam and a phenolic resin foam laminate were obtained in the same way as in Example 1 with the exception that the phenolic resin E was used as the phenolic resin, the compound F was used instead of the compound A, and 7 parts by mass of the compound F was added per 100 parts by mass of the phenolic resin mixed with the surfactant.

(Example 15)

A phenolic resin foam and a phenolic resin foam laminate were obtained in the same way as in Example 1 with the exception that the phenolic resin E was used as the phenolic resin, the compound G was used instead of the compound A, and 12 parts by mass of the compound G was added per 100 parts by mass of the phenolic resin mixed with the surfactant.

(Example 16)

A phenolic resin foam and a phenolic resin foam laminate were obtained in the same way as in Example 1 with the exception that the phenolic resin F was used as the phenolic resin, the compound B was used instead of the compound A, 9 parts by mass of the compound B was added per 100 parts by mass of the phenolic resin mixed with the surfactant, and a nonwoven fabric made of polyester (product name: Spunbond E05030 (weight per unit area: 30 g/m$^2$), produced by Asahi Kasei Corporation, Fibers and Textiles SBU) was used for the upper surface material and the lower surface material.

(Example 17)

A phenolic resin foam and a phenolic resin foam laminate were obtained in the same way as in Example 1 with the exception that the phenolic resin G was used as the phenolic resin and 13 parts by mass of the compound A was added per 100 parts by mass of the phenolic resin mixed with the surfactant.

(Example 18)

A phenolic resin foam and a phenolic resin foam laminate were obtained in the same way as in Example 1 with the exception that a compound H was used instead of the compound A and 7 parts by mass of the compound H was added per 100 parts by mass of the phenolic resin mixed with the surfactant.

(Example 19)

A phenolic resin foam and a phenolic resin foam laminate were obtained in the same way as in Example 1 with the exception that a compound I was used instead of the compound A and 11 parts by mass of the compound I was added per 100 parts by mass of the phenolic resin mixed with the surfactant.

(Example 20)

A phenolic resin foam and a phenolic resin foam laminate were obtained in the same way as in Example 1 with the exception that a compound J was used instead of the compound A and 11 parts by mass of the compound J was added per 100 parts by mass of the phenolic resin mixed with the surfactant.

(Example 21)

A phenolic resin foam and a phenolic resin foam laminate were obtained in the same way as in Example 1 with the exception that a compound K was used instead of the compound A and 11 parts by mass of the compound K was added per 100 parts by mass of the phenolic resin mixed with the surfactant.

(Example 22)

A phenolic resin foam and a phenolic resin foam laminate were obtained in the same way as in Example 1 with the exception that the phenolic resin E was used as the phenolic resin, a compound L was used instead of the compound A, and 9 parts by mass of the compound L was added per 100 parts by mass of the phenolic resin mixed with the surfactant.

(Example 23)

A phenolic resin foam and a phenolic resin foam laminate were obtained in the same way as in Example 1 with the exception that the phenolic resin E was used as the phenolic resin, a compound M was used instead of the compound A, and 9 parts by mass of the compound M was added per 100 parts by mass of the phenolic resin mixed with the surfactant.

(Example 24)

A phenolic resin foam and a phenolic resin foam laminate were obtained in the same way as in Example 1 with the exception that a compound N was used instead of the compound A and 10 parts by mass of the compound N was added per 100 parts by mass of the phenolic resin mixed with the surfactant.

(Example 25)

A foamable phenolic resin composition was obtained in the same way as in Example 1 with the exception that the phenolic resin E was used as the phenolic resin and 10 parts by mass of the compound A was added per 100 parts by mass of the phenolic resin mixed with the surfactant. The foamable phenolic resin composition was poured into an aluminum frame covered at the inside by a surface material and having internal dimensions of 1,000 mm in length, 1,000 mm in width, and 1,000 mm in thickness, and was tightly sealed in. The perimeter and upper and lower surfaces of the frame were clamped to prevent widening due to foaming pressure. The frame was introduced into an oven heated to 85°C and curing was performed for 60 minutes. Thereafter, a phenolic resin foam was removed from the frame and was then heated for 5 hours in a 110°C oven to obtain a block-shaped phenolic resin foam. The surface material that was used was the same as in Example 1. The block-shaped phenolic resin foam that was obtained was sliced with a thickness of 50 mm from a central part in a thickness direction to obtain a board-shaped phenolic resin foam.

(Example 26)

A phenolic resin foam and a phenolic resin foam laminate were obtained in the same way as in Example 1 with the exception that a gas permeable aluminum sheet that was reinforced with glass fiber and pre-perforated with through holes of 0.5 mm in diameter at a spacing of 20 mm was used for the upper surface material and the lower surface material.

(Example 27)

A phenolic resin foam and a phenolic resin foam laminate were obtained in the same way as in Example 1 with the exception that 2 parts by mass of hexamethyldisiloxane was added per 100 parts by mass of the phenolic resin mixed with the surfactant.

(Example 28)

A phenolic resin foam and a phenolic resin foam laminate were obtained in the same way as in Example 1 with the exception that the compound G was used instead of the compound A and 2 parts by mass of hexamethyldisiloxane was added per 100 parts by mass of the phenolic resin mixed with the surfactant.

(Example 29)

A phenolic resin foam and a phenolic resin foam laminate were obtained in the same way as in Example 1 with the exception that the compound I was used instead of the compound A and 2 parts by mass of hexamethyldisiloxane was added per 100 parts by mass of the phenolic resin mixed with the surfactant.

(Example 30)

A phenolic resin foam and a phenolic resin foam laminate were obtained in the same way as in Example 1 with the exception that a compound O was used instead of the compound A, 7 parts by mass of the compound O was added per 100 parts by mass of the phenolic resin mixed with the surfactant, and 1 part by mass of a phthalic acid ester was added as a plasticizer per 100 parts by mass of the phenolic resin mixed with the surfactant.

(Example 31)

A phenolic resin foam and a phenolic resin foam laminate were obtained in the same way as in Example 1 with the exception that a compound P was used instead of the compound A, 7 parts by mass of the compound P was added per 100 parts by mass of the phenolic resin mixed with the surfactant, and 1 part by mass of a phthalic acid ester was added as a plasticizer per 100 parts by mass of the phenolic resin mixed with the surfactant.

(Example 32)

A phenolic resin foam and a phenolic resin foam laminate were obtained in the same way as in Example 1 with the exception that the phenolic resin D was used as the phenolic resin, the compound O was used instead of the compound A, 7 parts by mass of the compound O was added per 100 parts by mass of the phenolic resin mixed with the surfactant, and 1 part by mass of a phthalic acid ester was added as a plasticizer per 100 parts by mass of the phenolic resin mixed with the surfactant.

(Example 33)

A phenolic resin foam and a phenolic resin foam laminate were obtained in the same way as in Example 1 with the exception that a compound Q was used instead of the compound A and 7 parts by mass of the compound Q was added per 100 parts by mass of the phenolic resin mixed with the surfactant.

(Example 34)

A phenolic resin foam and a phenolic resin foam laminate were obtained in the same way as in Example 1 with the exception that the phenolic resin E was used as the phenolic resin, a compound R was used instead of the compound A, 9 parts by mass of the compound R was added per 100 parts by mass of the phenolic resin mixed with the surfactant, and 1 part by mass of a phthalic acid ester was added as a plasticizer per 100 parts by mass of the phenolic resin mixed with the surfactant.

(Example 35)

A phenolic resin foam and a phenolic resin foam laminate were obtained in the same way as in Example 1 with the exception that the phenolic resin F was used as the phenolic resin, a compound S was used instead of the compound A, and 10 parts by mass of the compound S was added per 100 parts by mass of the phenolic resin mixed with the surfactant.

(Example 36)

A phenolic resin foam and a phenolic resin foam laminate were obtained in the same way as in Example 1 with the exception that a compound T was used instead of the compound A, 6 parts by mass of the compound T was added per 100 parts by mass of the phenolic resin mixed with the surfactant, and 1 part by mass of a phthalic acid ester was added as a plasticizer per 100 parts by mass of the phenolic resin mixed with the surfactant.

(Example 37)

A phenolic resin foam and a phenolic resin foam laminate were obtained in the same way as in Example 1 with the exception that a compound U was used instead of the compound A and 7 parts by mass of the compound U was added per 100 parts by mass of the phenolic resin mixed with the surfactant.

(Example 38)

A phenolic resin foam and a phenolic resin foam laminate were obtained in the same way as in Example 1 with the exception that a compound V was used instead of the compound A, 6 parts by mass of the compound V was added per 100 parts by mass of the phenolic resin mixed with the surfactant, and 1 part by mass of a phthalic acid ester was added as a plasticizer per 100 parts by mass of the phenolic resin mixed with the surfactant.

(Example 39)

A phenolic resin foam and a phenolic resin foam laminate were obtained in the same way as in Example 1 with the exception that the phenolic resin B was used as the phenolic resin, a compound W was used instead of the compound A, and 10 parts by mass of the compound W was added per 100 parts by mass of the phenolic resin mixed with the surfactant.

(Example 40)

A phenolic resin foam and a phenolic resin foam laminate were obtained in the same way as in Example 1 with the exception that a compound X was used instead of the compound A, 11 parts by mass of the compound X was added per 100 parts by mass of the phenolic resin mixed with the surfactant, and 1 part by mass of a phthalic acid ester was added as a plasticizer per 100 parts by mass of the phenolic resin mixed with the surfactant.

(Example 41)

A phenolic resin foam and a phenolic resin foam laminate were obtained in the same way as in Example 1 with the exception that the phenolic resin F was used as the phenolic resin, a compound Y was used instead of the compound A, 7 parts by mass of the compound Y was added per 100 parts by mass of the phenolic resin mixed with the surfactant, and 1 part by mass of a phthalic acid ester was added as a plasticizer per 100 parts by mass of the phenolic resin mixed with the surfactant.

(Example 42)

A phenolic resin foam and a phenolic resin foam laminate were obtained in the same way as in Example 1 with the exception that a compound Z was used instead of the compound A and 10 parts by mass of the compound Z was added per 100 parts by mass of the phenolic resin mixed with the surfactant.

(Comparative Example 1)

A phenolic resin foam and a phenolic resin foam laminate were obtained in the same way as in Example 1 with the exception that the phenolic resin H was used as the phenolic resin and 11 parts by mass of the compound A was added per 100 parts by mass of the phenolic resin mixed with the surfactant.

(Comparative Example 2)

A phenolic resin foam and a phenolic resin foam laminate were obtained in the same way as in Example 1 with the exception that the phenolic resin I was used as the phenolic resin and 11 parts by mass of the compound A was added per 100 parts by mass of the phenolic resin mixed with the surfactant.

(Comparative Example 3)

A phenolic resin foam and a phenolic resin foam laminate were obtained in the same way as in Example 1 with the exception that the phenolic resin J was used as the phenolic resin and 11 parts by mass of the compound A was added per 100 parts by mass of the phenolic resin mixed with the surfactant.

(Comparative Example 4)

A phenolic resin foam and a phenolic resin foam laminate were obtained in the same way as in Example 1 with the exception that the phenolic resin K was used as the phenolic resin and 10 parts by mass of the compound A was added per 100 parts by mass of the phenolic resin mixed with the surfactant.

(Comparative Example 5)

A phenolic resin foam and a phenolic resin foam laminate were obtained in the same way as in Example 1 with the exception that the phenolic resin L was used as the phenolic resin, the compound B was used instead of the compound A, and 9 parts by mass of the compound B was added per 100 parts by mass of the phenolic resin mixed with the surfactant.
Tables 3, 4, and 5 show the resins that were used, the properties of these resins, and the compounds that were used for the phenolic resin foams obtained in the examples and comparative examples, and also show properties and evaluation results for the obtained phenolic resin foams.

Table 3

| | Examples | | | | | | | | | | | | | | | | | | |
|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 |
| Used resin | A | A | A | A | A | A | A | B | C | D | D | E | E | E | E | F | G | A | A |
| Weight average molecular weight | 910 | 910 | 910 | 910 | 910 | 910 | 910 | 910 | 530 | 530 | 530 | 2200 | 2200 | 2200 | 2200 | 2200 | 2940 | 910 | 910 |
| Viscosity increase rate constant [1/min] | 0.12 | 0.12 | 0.12 | 0.12 | 0.12 | 0.12 | 0.12 | 0.12 | 0.09 | 0.05 | 0.05 | 0.28 | 0.28 | 0.28 | 0.28 | 0.48 | 0.32 | 0.12 | 0.12 |
| Used compound | A | B | C | D | E | F | G | A | A | A | F | A | D | F | G | B | A | H | I |
| Surface material type | Glass fiber nonwoven fabric | Glass fiber nonwoven fabric | Glass fiber nonwoven fabric | PET fiber nonwoven fabric | Glass fiber nonwoven fabric | Glass fiber nonwoven fabric | Glass fiber nonwoven fabric | PET fiber nonwoven fabric | PET fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | PET fiber nonwoven fabric | Glass fiber nonwoven fabric | Glass fiber nonwoven fabric | Glass fiber nonwoven fabric |
| Use of nitrogen-containing compound | Yes | Yes | Yes | Yes | Yes | Yes | Yes | Yes | Yes | Yes | Yes | Yes | Yes | Yes | Yes | Yes | Yes | Yes | Yes |
| Type and composition ratio (mass%) of identified compound α and/or hydrocarbon | 1-Chloro-3,3,3-trifluoropropene (100%) | 1,3,3,3-Tetrafluoro-1-propene (100%) | 2,3,3,3-Tetrafluoro-1-propene (100%) | 1,1,1,4,4,4-Hexafluoro-2-butene (100%) | Isopropyl chloride (100%) | 1-Chloro-3,3,3-trifluoropropene (31%) Cyclopentane (69%) | 1-Chloro-3,3,3-trifluoropropene (88%) Cyclopentane (12%) | 1-Chloro-3,3,3-trifluoropropene (100%) | 1-Chloro-3,3,3-trifluoropropene (100%) | 1-Chloro-3,3,3-trifluoropropene (100%) | 1-Chloro-3,3,3-trifluoropropene (30%) Cyclopentane (70%) | 1-Chloro-3,3,3-trifluoropropene (100%) | 1,1,1,4,4,4-Hexafluoro-2-butene (100%) | 1-Chloro-3,3,3-trifluoropropene (33%) Cyclopentane (67%) | 1-Chloro-3,3,3-trifluoropropene (90%) Cyclopentane (10%) | 1,3,3,3-Tetrafluoro-1-propene (100%) | 1-Chloro-3,3,3-trifluoropropene (100%) | 1-Chloro-3,3,3-trifluoropropene (48%) Cyclopentane (52%) | 1-Chloro-3,3,3-trifluoropropene (83%) Isopentane (17%) |
| Density [kg/m³] | 28.3 | 34.3 | 35.2 | 26.8 | 28.3 | 27.5 | 27.3 | 27.6 | 33.8 | 28.3 | 29.3 | 27.6 | 42.3 | 43.6 | 26.8 | 36.2 | 38.3 | 37.5 | 32.1 |
| Closed cell ratio [%] | 93.1 | 91.8 | 92.2 | 93.2 | 93.4 | 94.3 | 93.3 | 91.0 | 90.1 | 83.1 | 92.3 | 93.6 | 94.5 | 93.6 | 94.2 | 89.3 | 81.3 | 94.6 | 95.2 |
| 10% compressive strength [N/cm²] | 16.2 | 22.3 | 23.3 | 15.3 | 15.8 | 15.4 | 15.2 | 13.2 | 14.8 | 7.8 | 14.6 | 16.6 | 28.3 | 29.4 | 16.4 | 13.2 | 18.8 | 24.3 | 19.6 |
| 0.5 × Density − 7 | 7.2 | 10.2 | 10.6 | 6.4 | 7.2 | 6.8 | 6.7 | 6.8 | 9.9 | 7.2 | 7.7 | 6.8 | 14.2 | 14.8 | 6.4 | 11.1 | 12.2 | 11.8 | 9.1 |
| Absolute value of amount of dimensional change after 3 dry-wet cycles [mm] | 0.7 | 0.6 | 0.6 | 0.6 | 0.6 | 0.5 | 0.6 | 0.7 | 0.9 | 1.6 | 0.6 | 0.5 | 0.4 | 0.3 | 0.4 | 0.8 | 1.3 | 0.6 | 0.4 |
| Brittleness [%] | 9.2 | 8.8 | 9.5 | 10.1 | 15.3 | 8.3 | 8.9 | 10.8 | 30.3 | 45.3 | 8.3 | 7.8 | 5.3 | 4.1 | 6.8 | 36.3 | 13.2 | 8.6 | 6.3 |

Table 4

| | Examples | | | | | | | | | | | | | | | | | | |
|---|---|---|---|---|---|---|---|---|---|---|---|---|---|---|---|---|---|---|---|
| | 20 | 21 | 22 | 23 | 24 | 25 | 26 | 27 | 28 | 29 | 30 | 31 | 32 | 33 | 34 | 35 | 36 | 37 | 38 |
| Used resin | A | A | E | E | A | E | A | A | A | A | A | A | D | A | E | F | A | A | A |
| Weight average molecular weight | 910 | 910 | 2200 | 2200 | 910 | 2200 | 910 | 910 | 910 | 910 | 910 | 910 | 530 | 910 | 2200 | 2200 | 910 | 910 | 910 |
| Viscosity increase rate constant [1/min] | 0.12 | 0.12 | 0.28 | 0.28 | 0.12 | 0.28 | 0.12 | 0.12 | 0.12 | 0.12 | 0.12 | 0.12 | 0.05 | 0.12 | 0.28 | 0.48 | 0.12 | 0.12 | 0.12 |
| Used compound | J | K | L | M | N | A | A | A | G | I | O | P | O | Q | R | S | T | U | V |
| Surface material type | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Perforated aluminum sheet reinforced with glass fiber | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric |
| Use of nitrogen-containing compound | Yes | Yes | Yes | Yes | Yes | Yes | Yes | Yes | Yes | Yes | Yes | Yes | Yes | Yes | Yes | Yes | Yes | Yes | Yes |
| Type and composition ratio (mass%) of identified compound α and/or hydrocarbon | 1-Chloro-3,3,3-trifluoro propene (87%) Isopropyl chloride (13%) | 1,3,3,3-Tetrafluoro-1-propene (82%) Isopropyl chloride (18%) | 1-Chloro-3,3,3-trifluoro propene (49%) Isopropyl chloride (40%) Isopentane (11%) | 1,3,3,3-Tetrafluoro-1-propene (46%) Isopropyl chloride (43%) Isopentane (11%) | 1-Chloro-3,3,3-trifluoro propene (90%) Isobutane (10%) | 1-Chloro-3,3,3-trifluoro propene (100%) | 1-Chloro-3,3,3-trifluoro propene (100%) | 1-Chloro-3,3,3-trifluoro propene (100%) | 1-Chloro-3,3,3-trifluoro propene (91%) Cyclopentane (9%) | 1-Chloro-3,3,3-trifluoro propene (85%) Isopentane (15%) | 1-Chloro-3,3,3-trifluoro propene (22%) Isopropyl chloride (78%) | 2-Chloro-3,3,3-trifluoro propene (20%) Isopropyl chloride (80%) | 1-Chloro-3,3,3-trifluoro propene (20%) Isopropyl chloride (80%) | 1-Chloro-3,3,3-trifluoro propene (19%) Isopentane (81%) | 1-Chloro-3,3,3-trifluoro propene (50%) Isopropyl chloride (50%) | 1-Chloro-3,3,3-trifluoro propene (82%) 1,3,3,3-Tetrafluoro-1-propene (18%) | 1-Chloro-3,3,3-trifluoro propene (10%) Isopropyl chloride (78%) Cyclopentane (12%) | 1,3,3,3-Tetrafluoro-1-propene (20%) Cyclopentane (80%) | 1,3,3,3-Tetrafluoro-1-propene (18%) Isopropyl chloride (82%) |
| Density [kg/m$^3$] | 31.8 | 36.4 | 35.2 | 37.2 | 27.6 | 30.1 | 27.6 | 27.8 | 26.1 | 30.2 | 31.2 | 32.4 | 31.7 | 28.3 | 28.7 | 33.1 | 28.6 | 22.6 | 30.8 |
| Closed cell ratio [%] | 92.8 | 92.8 | 94.1 | 92.1 | 93.6 | 90.2 | 91.2 | 98.2 | 99.1 | 97.3 | 91.6 | 92.3 | 81.8 | 93.1 | 93.6 | 91.3 | 93.2 | 90.1 | 90.9 |
| 10% compressive strength [N/cm$^2$] | 16.8 | 19.2 | 22.1 | 23.4 | 15.6 | 15.6 | 15.2 | 15.8 | 14.3 | 18.1 | 16.5 | 15.8 | 9.6 | 14.8 | 15.8 | 19.8 | 14.8 | 11.2 | 15.9 |
| $0.5 \times$ Density − 7 | 8.9 | 11.2 | 10.6 | 11.6 | 6.8 | 8.1 | 6.8 | 6.9 | 6.1 | 8.1 | 8.6 | 9.2 | 8.9 | 7.2 | 7.4 | 9.6 | 7.3 | 4.3 | 8.4 |
| Absolute value of amount of dimensional change after 3 dry-wet cycles [mm] | 0.6 | 1.0 | 0.3 | 0.7 | 0.5 | 0.8 | 0.6 | 0.8 | 0.6 | 0.6 | 0.7 | 0.6 | 1.7 | 0.5 | 0.6 | 0.8 | 0.7 | 0.9 | 0.8 |
| Brittleness [%] | 8.1 | 8.6 | 4.6 | 7.5 | 8.6 | 10.2 | 10.6 | 9.8 | 8.7 | 7.9 | 14.3 | 13.3 | 14.7 | 12.8 | 12.4 | 10.1 | 13.3 | 14.9 | 13.8 |

Table 5

| | Examples | | | | Comparative Examples | | | | |
|---|---|---|---|---|---|---|---|---|---|
| | 39 | 40 | 41 | 42 | 1 | 2 | 3 | 4 | 5 |
| Used resin | B | A | F | A | H | I | J | K | L |
| Weight average molecular weight | 910 | 910 | 2200 | 910 | 910 | 910 | 320 | 3250 | 3000 |
| Viscosity increase rate constant [l/min] | 0.12 | 0.12 | 0.48 | 0.12 | 0.55 | 0.12 | 0.13 | 0.21 | 0.26 |
| Used compound | W | X | Y | Z | A | A | A | A | B |
| Surface material type | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric | Glass fiber nonwoven fabric |
| Use of nitrogen-containing compound | Yes | Yes | Yes | Yes | No | Yes | Yes | Yes | Yes |
| Type and composition ratio (mass%) of identified compound α and/or hydrocarbon | 1,1,1,4,4,4-Hexafluoro-2-butene (80%) Cyclopentane (20%) | 1,1,1,4,4,4-Hexafluoro-2-butene (79%) Isopropyl chloride (21%) | 1,1,1,4,4,4-Hexafluoro-2-butene (23%) Isopropyl chloride (77%) | 1,1,1,4,4,4-Hexafluoro-2-butene (81%) 1,3,3,3-Tetrafluoro-1-propene (19%) | 1-Chloro-3,3,3-trifluoro propene (100%) | 1-Chloro-3,3,3-trifluoro propene (100%) | 1-Chloro-3,3,3-trifluoro propene (100%) | 1-Chloro-3,3,3-trifluoro propene (100%) | 1,3,3,3-Tetrafluoro-1-propene (100%) |
| Density [kg/m$^3$] | 27.2 | 28.4 | 30.9 | 33.7 | 30.2 | 28.6 | 33.3 | 29.3 | 31.3 |
| Closed cell ratio [%] | 93.6 | 90.1 | 92.3 | 92.9 | 78.3 | 83.2 | 71.3 | 78.6 | 75.2 |
| 10% compressive strength [N/cm$^2$] | 15.4 | 15.2 | 16.4 | 16.9 | 6.8 | 7.1 | 8.8 | 7.3 | 7.0 |
| 0.5 × Density - 7 | 6.6 | 7.2 | 8.5 | 9.9 | 8.1 | 7.3 | 9.7 | 7.7 | 8.7 |

(continued)

| | Examples | | | | Comparative Examples | | | | |
|---|---|---|---|---|---|---|---|---|---|
| | 39 | 40 | 41 | 42 | 1 | 2 | 3 | 4 | 5 |
| Absolute value of amount of dimensional change after 3 dry-wet cycles [mm] | 0.7 | 1.3 | 0.6 | 0.7 | 2.4 | 0.8 | 2.2 | 0.7 | 1.6 |
| Brittleness [%] | 10.4 | 12.2 | 12.8 | 9.4 | 4.6 | 16.7 | 53.6 | 54.3 | 58.1 |

The phenolic resin foams of Examples 1 to 32 had excellent strength against compression, did not result in an excessively heavy insulating material, had excellent handling properties, and enabled improved installation efficiency. Moreover, these phenolic resin foams also excelled in terms of installation costs since components, a frame, or like used in securing these phenolic resin foams were fewer in number.

Furthermore, the phenolic resin foams of Examples 1-32 did not suffer from a problem of denting or cracking of the surface thereof when walked upon during construction or maintenance of a building having a floor or flat roof in which the phenolic resin foam was installed.

On the other hand, the phenolic resin foams of Comparative Examples 1 to 5 had low compressive strength relative to density and inadequate strength against compression. In particular, the phenolic resin foams of Comparative Examples 1, 3, 4, and 5 had a low closed cell ratio and poor thermal conductivity.

INDUSTRIAL APPLICABILITY

The phenolic resin foam according to the present embodiment has low environmental impact, high compressive strength, excellent handling properties in installation, and low costs associated with securing, and can, therefore, be suitably adopted as an insulating material or the like in housing applications.

**Claims**

1. A phenolic resin foam comprising
   at least one selected from the group consisting of a chlorinated hydrofluoroolefin, a non-chlorinated hydrofluoroolefin, and a halogenated hydrocarbon, wherein
   the phenolic resin foam has a density of at least 20 kg/m$^3$ and no greater than 100 kg/m$^3$,
   the phenolic resin foam has a closed cell ratio of at least 80% and no greater than 99%,
   the phenolic resin foam has a brittleness of no greater than 50% as determined in accordance with JIS A 9511(2003)5.14, and
   the density and 10% compressive strength of the phenolic resin foam satisfy a relationship:

$$C \geq 0.5X - 7$$

   where C represents the 10% compressive strength in N/cm$^2$ and X represents the density in kg/m$^3$.

2. The phenolic resin foam according to claim 1, comprising:

   the halogenated hydrocarbon; and
   at least one selected from the group consisting of the chlorinated hydrofluoroolefin and the non-chlorinated hydrofluoroolefin.

3. The phenolic resin foam according to claim 1 or 2, wherein
   the at least one selected from the group consisting of the chlorinated hydrofluoroolefin and the non-chlorinated hydrofluoroolefin is at least one selected from the group consisting of 1-chloro-3,3,3-trifluoropropene, 2-chloro-3,3,3-trifluoropropene, 1,3,3,3-tetrafluoro-1-propene, 2,3,3,3-tetrafluoro-1-propene, and 1,1,1,4,4,4-hexafluoro-2-butene.

4. The phenolic resin foam according to any one of claims 1 to 3, wherein
   the halogenated hydrocarbon is isopropyl chloride.

5. The phenolic resin foam according to any one of claims 1 to 4, further comprising
   a hydrocarbon having a carbon number of no greater than 6.

6. The phenolic resin foam according to claim 5, wherein
   the least one selected from the group consisting of the chlorinated hydrofluoroolefin, the non-chlorinated hydrofluoroolefin, and the halogenated hydrocarbon has a content of at least 30 mass% relative to total content of the chlorinated hydrofluoroolefin, the non-chlorinated hydrofluoroolefin, the halogenated hydrocarbon, and the hydrocarbon having a carbon number of no greater than 6.

**7.** The phenolic resin foam according to any one of claims 1 to 6, further comprising
a nitrogen-containing compound.

**8.** The phenolic resin foam according to claim 7, wherein
the nitrogen-containing compound is a compound selected from the group consisting of urea, melamine, nuclidine, pyridine, hexamethylenetetramine, and mixtures thereof.

**9.** The phenolic resin foam according to any one of claims 1 to 8, wherein
an absolute value of an amount of dimensional change of the phenolic resin foam after three dry-wet cycles is no greater than 2.0 mm.

**10.** The phenolic resin foam according to any one of claims 1 to 9, further comprising a plasticizer.

**11.** A phenolic resin foam laminate comprising:

the phenolic resin foam according to any one of claims 1 to 10; and
surface materials respectively on a first surface and a second surface of the phenolic resin foam, wherein
the surface materials are both gas permeable.

**12.** A method of producing a phenolic resin foam, for use in producing the phenolic resin foam according to claim 1, comprising
foaming and curing, on a surface material, a foamable phenolic resin composition containing a phenolic resin, a surfactant, a curing catalyst, and at least one selected from the group consisting of a chlorinated hydrofluoroolefin, a non-chlorinated hydrofluoroolefin, and a halogenated hydrocarbon, wherein
the phenolic resin has a weight average molecular weight Mw of at least 400 and no greater than 3,000 as determined by gel permeation chromatography,
the phenolic resin has a viscosity at 40°C of at least 1,000 mPa·s and no greater than 100,000 mPa·s, and
the phenolic resin has a viscosity increase rate constant of at least 0.05 (1/min) and no greater than 0.5 (1/min).

**13.** The method of producing a phenolic resin foam according to claim 12, wherein
the phenolic resin has a loss tangent tan $\delta$ at 40°C of at least 0.5 and no greater than 40.0, and has a loss tangent tan $\delta$ at 60°C of at least 2.0 and no greater than 90.0.

Europäisches
Patentamt

European
Patent Office

Office européen
des brevets

## EUROPEAN SEARCH REPORT

Application Number

EP 20 15 1403

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/029221 A1 (KINGSPAN HOLDINGS IRL LTD [IE]; COPPOCK VINCENT [GB]; ZEGGELAAR RUUD []) 15 March 2007 (2007-03-15) | 1,2,4-11 | INV.<br>C08J9/14<br>C08L61/04 |
| Y | * page 8, line 9 - line 16 *<br>* page 19, line 1 - line 4 *<br>* page 19, line 11 - line 13 *<br>* page 26, line 14 - line 16; claims 1,4,7,10,11,13,23-26,32,37,38,40-43,47,48; table 1 * | 12,13 | |
| X | EP 1 095 970 A1 (ASAHI CHEMICAL IND [JP]) 2 May 2001 (2001-05-02) | 1,11 | |
| Y | * paragraphs [0012], [0034] - [0036]; claims 1,5,9,10; table 3 * | 12 | |
| X | JP 2002 037910 A (ASAHI ORGANIC CHEM IND; NITTO BOSEKI CO LTD ET AL.) 6 February 2002 (2002-02-06) * paragraphs [0015], [0022] - [0031]; claim 1 * | 1,3,11 | |
| X | US 5 407 963 A (WILLSON JENNIFER [CA] ET AL) 18 April 1995 (1995-04-18) * column 2, line 3 - line 10 * * column 2, line 63 - column 3, line 13; claims 1,5; table 2 * | 1,3,11 | TECHNICAL FIELDS SEARCHED (IPC)<br>C08J<br>C08L |
| Y | EP 0 897 675 A1 (SHISHIAI KK [JP]) 24 February 1999 (1999-02-24) * paragraphs [0049], [0158]; table 13.1 * | 13 | |
| Y | WO 2009/067720 A2 (HONEYWELL INT INC [US]; BOWMAN JAMES M [US]; WILLIAMS DAVID J [US]) 28 May 2009 (2009-05-28) * page 8, line 15 - page 9, line 20 * * page 21, line 26 - page 23, line 2; claims 1,3,10,38,40 * | 2,3,5,6 | |

-/--

The present search report has been drawn up for all claims

| Place of search | Date of completion of the search | Examiner |
|---|---|---|
| The Hague | 20 April 2020 | Magrizos, Simeon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 20 15 1403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/121783 A1 (ARKEMA INC [US]; CHEN BENJAMIN B [US] ET AL.) 9 October 2008 (2008-10-09) * page 1, line 26 - page 2, line 9 * * page 3, line 15 - page 4, line 12; claims 1,4,7,16,20 * ----- | 2,3,5,6 | |
| Y | WO 2007/002703 A2 (HONEYWELL INT INC [US]; BOWMAN JAMES M [US]; WILLIAMS DAVID J [US]) 4 January 2007 (2007-01-04) * page 7, line 30 - page 8, line 18 * * page 23, line 15 - page 24, line 27; claims 24,28 * ----- | 2,3,5,6 | |

**TECHNICAL FIELDS SEARCHED (IPC)**

The present search report has been drawn up for all claims

| Place of search | Date of completion of the search | Examiner |
|---|---|---|
| The Hague | 20 April 2020 | Magrizos, Simeon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.                    EP 20 15 1403

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2020

| Patent document cited in search report | Publication date | Patent family member(s) | | Publication date |
|---|---|---|---|---|
| WO 2007029221 A1 | 15-03-2007 | AU | 2006288689 A1 | 15-03-2007 |
| | | CA | 2621520 A1 | 15-03-2007 |
| | | CN | 101305034 A | 12-11-2008 |
| | | EP | 1922356 A1 | 21-05-2008 |
| | | US | 2011124257 A1 | 26-05-2011 |
| | | US | 2013072590 A1 | 21-03-2013 |
| | | WO | 2007029221 A1 | 15-03-2007 |
| EP 1095970 A1 | 02-05-2001 | AU | 4396099 A | 24-01-2000 |
| | | CA | 2336374 A1 | 13-01-2000 |
| | | CN | 1307607 A | 08-08-2001 |
| | | DE | 69924253 T2 | 22-12-2005 |
| | | EP | 1095970 A1 | 02-05-2001 |
| | | JP | 3813062 B2 | 23-08-2006 |
| | | KR | 20010053372 A | 25-06-2001 |
| | | US | 6476090 B1 | 05-11-2002 |
| | | WO | 0001761 A1 | 13-01-2000 |
| JP 2002037910 A | 06-02-2002 | JP | 4878672 B2 | 15-02-2012 |
| | | JP | 2002037910 A | 06-02-2002 |
| US 5407963 A | 18-04-1995 | AU | 2240995 A | 04-01-1996 |
| | | CA | 2191598 A1 | 14-12-1995 |
| | | DE | 69510939 D1 | 26-08-1999 |
| | | DE | 69510939 T2 | 16-03-2000 |
| | | EP | 0764184 A1 | 26-03-1997 |
| | | JP | 2750005 B2 | 13-05-1998 |
| | | JP | H09503547 A | 08-04-1997 |
| | | KR | 0160242 B1 | 15-01-1999 |
| | | TW | 354315 B | 11-03-1999 |
| | | US | 5407963 A | 18-04-1995 |
| | | WO | 9533788 A1 | 14-12-1995 |
| EP 0897675 A1 | 24-02-1999 | AT | 372069 T | 15-09-2007 |
| | | AT | 421859 T | 15-02-2009 |
| | | AU | 732307 B2 | 12-04-2001 |
| | | CN | 1217635 A | 26-05-1999 |
| | | EP | 0897675 A1 | 24-02-1999 |
| | | EP | 1564244 A2 | 17-08-2005 |
| | | EP | 1564245 A2 | 17-08-2005 |
| | | EP | 1564824 A2 | 17-08-2005 |
| | | EP | 1574545 A2 | 14-09-2005 |
| | | EP | 1574546 A2 | 14-09-2005 |
| | | HK | 1019544 A1 | 25-07-2008 |
| | | IL | 125467 A | 29-12-2008 |
| | | JP | 3318593 B2 | 26-08-2002 |

EPO FORM P0459

For more details about this annex : see Official Journal of the European Patent Office, No. 12/82

page 1 of 4

**ANNEX TO THE EUROPEAN SEARCH REPORT
ON EUROPEAN PATENT APPLICATION NO.**
EP 20 15 1403

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2020

| Patent document cited in search report | Publication date | Patent family member(s) | Publication date |
|---|---|---|---|
| | | KR 19990082345 A | 25-11-1999 |
| | | NO 311527 B1 | 03-12-2001 |
| | | NZ 333119 A | 29-09-2000 |
| | | RU 2185765 C2 | 27-07-2002 |
| | | TR 199802266 T2 | 22-03-1999 |
| | | US 2002031626 A1 | 14-03-2002 |
| | | US 2002037381 A1 | 28-03-2002 |
| | | US 2002160131 A1 | 31-10-2002 |
| | | WO 9742844 A1 | 20-11-1997 |
| WO 2009067720 A2 | 28-05-2009 | CA 2706774 A1 | 28-05-2009 |
| | | CA 2997980 A1 | 28-05-2009 |
| | | CN 101925644 A | 22-12-2010 |
| | | CN 105111491 A | 02-12-2015 |
| | | CN 105111492 A | 02-12-2015 |
| | | EP 2215152 A2 | 11-08-2010 |
| | | JP 6307116 B2 | 04-04-2018 |
| | | JP 2011504538 A | 10-02-2011 |
| | | JP 2015017268 A | 29-01-2015 |
| | | JP 2016199761 A | 01-12-2016 |
| | | JP 2018127628 A | 16-08-2018 |
| | | KR 20100112562 A | 19-10-2010 |
| | | KR 20140119134 A | 08-10-2014 |
| | | KR 20150038512 A | 08-04-2015 |
| | | KR 20160104745 A | 05-09-2016 |
| | | KR 20170091757 A | 09-08-2017 |
| | | KR 20190007105 A | 21-01-2019 |
| | | TW 200932807 A | 01-08-2009 |
| | | TW 201609893 A | 16-03-2016 |
| | | US 2009253820 A1 | 08-10-2009 |
| | | US 2013065044 A1 | 14-03-2013 |
| | | WO 2009067720 A2 | 28-05-2009 |
| WO 2008121783 A1 | 09-10-2008 | CA 2681832 A1 | 09-10-2008 |
| | | CN 104744721 A | 01-07-2015 |
| | | EP 2129709 A1 | 09-12-2009 |
| | | EP 2412753 A1 | 01-02-2012 |
| | | EP 3135720 A1 | 01-03-2017 |
| | | ES 2402168 T3 | 29-04-2013 |
| | | ES 2607226 T3 | 29-03-2017 |
| | | JP 5562827 B2 | 30-07-2014 |
| | | JP 6149000 B2 | 14-06-2017 |
| | | JP 6441983 B2 | 19-12-2018 |
| | | JP 2010522819 A | 08-07-2010 |
| | | JP 2014177637 A | 25-09-2014 |
| | | JP 2017155241 A | 07-09-2017 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 20 15 1403

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2020

| Patent document cited in search report | Publication date | Patent family member(s) | | Publication date |
|---|---|---|---|---|
| | | PL | 2129709 T3 | 30-09-2013 |
| | | PL | 2412753 T3 | 31-03-2017 |
| | | US | 2010105788 A1 | 29-04-2010 |
| | | WO | 2008121783 A1 | 09-10-2008 |
| WO 2007002703 A2 | 04-01-2007 | CA | 2613090 A1 | 04-01-2007 |
| | | CN | 103497351 A | 08-01-2014 |
| | | DE | 09173778 T1 | 26-08-2010 |
| | | DE | 13166417 T1 | 21-08-2014 |
| | | DE | 13166420 T1 | 13-02-2014 |
| | | DK | 2154223 T3 | 15-04-2013 |
| | | DK | 2660282 T3 | 08-01-2018 |
| | | EP | 1893715 A2 | 05-03-2008 |
| | | EP | 2154223 A1 | 17-02-2010 |
| | | EP | 2706087 A2 | 12-03-2014 |
| | | ES | 2338519 T1 | 10-05-2010 |
| | | ES | 2438525 T1 | 17-01-2014 |
| | | ES | 2464528 T1 | 03-06-2014 |
| | | JP | 5709232 B2 | 30-04-2015 |
| | | JP | 5995921 B2 | 21-09-2016 |
| | | JP | 6310176 B2 | 11-04-2018 |
| | | JP | 2008546892 A | 25-12-2008 |
| | | JP | 2013064139 A | 11-04-2013 |
| | | JP | 2014139316 A | 31-07-2014 |
| | | JP | 2015013991 A | 22-01-2015 |
| | | JP | 2016148037 A | 18-08-2016 |
| | | JP | 2018048327 A | 29-03-2018 |
| | | JP | 2019194328 A | 07-11-2019 |
| | | KR | 20080033292 A | 16-04-2008 |
| | | KR | 20130042641 A | 26-04-2013 |
| | | KR | 20140116458 A | 02-10-2014 |
| | | KR | 20140119717 A | 10-10-2014 |
| | | KR | 20150070413 A | 24-06-2015 |
| | | KR | 20160018846 A | 17-02-2016 |
| | | KR | 20170019496 A | 21-02-2017 |
| | | KR | 20170102046 A | 06-09-2017 |
| | | KR | 20190003826 A | 09-01-2019 |
| | | MX | 338138 B | 01-04-2016 |
| | | MX | 359510 B | 28-09-2018 |
| | | MY | 155122 A | 15-09-2015 |
| | | MY | 158385 A | 30-09-2016 |
| | | PL | 2154223 T3 | 28-06-2013 |
| | | PT | 2154223 E | 02-04-2013 |
| | | TW | I408162 B | 11-09-2013 |
| | | TW | 201336906 A | 16-09-2013 |
| | | TW | 201525034 A | 01-07-2015 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 20 15 1403

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2020

| Patent document cited in search report | Publication date | Patent family member(s) | | Publication date |
|---|---|---|---|---|
| | | TW | 201533108 A | 01-09-2015 |
| | | TW | 201815923 A | 01-05-2018 |
| | | WO | 2007002703 A2 | 04-01-2007 |

EPO FORM P0459

For more details about this annex : see Official Journal of the European Patent Office, No. 12/82

page 4 of 4

**REFERENCES CITED IN THE DESCRIPTION**

**Patent documents cited in the description**

- JP 2010522819 A
- JP 2013064139 A
- JP 2011504538 A
- JP 2007070507 A

**Non-patent literature cited in the description**

- *the Montreal Protocol,* 1987